# EUROPEAN PATENT APPLICATION

(11) **EP 2 413 568 A1**
(43) Date of publication of application: **01.02.2012**
(21) Application number: 10171296.6
(22) Date of filing: 29.07.2010
(51) Int. Cl.: H04L 29/08, G06Q 10/00, G06F 17/30

(54) **Identification and scheduling of events on a communication device**

(71) Applicant: RESEARCH IN MOTION LIMITED, Waterloo, Ontario N2L 3W8 (CA)
(72) Inventor: Jain, Rohit Rocky, Waterloo Ontario N2L 3L3 (CA)
(74) Representative: Moore, Barry

(57) **Abstract**

A method, communication device and system are provided for identifying and scheduling events, such as meetings and appointments identified in data items such as messages and electronic documents. Content relating to an event is identified within the data item, and date information for the identified event is determined based on the content of the data item or other contextual information. An availability status in respect of the event is determined by querying a data store, such as a calendar store, to determine whether the date and time associated with the identified event is free or in conflict. Once the availability status is determined, the data item may be displayed at the communication device together with a visual indicator of the availability status. The identified event in the data item may be actuatable to create an event item for storage in the data store.

## Description

The present application relates generally to identification and management of scheduled event data on a communication device.

User communication devices, such as mobile communication devices, are often provisioned with personal information management applications, such as calendar applications, for scheduling appointments and organizing meetings with others. Calendar applications typically permit the user to schedule an event, and optionally to transmit a meeting "invitation" to recipients for the scheduled event in a predetermined calendar item format. Upon acceptance by the invitation recipient, data relating to the event may be stored in a counterpart calendar application at the recipient's communication device, and a confirmation may be transmitted to the sending user.

Coordination of meetings prior to the transmission of the invitation, however, is often handled outside the calendar application. For example, the user and recipients may correspond by e-mail or by telephone first, to identify and agree upon a mutually convenient time slot for scheduling the meeting. Once the time slot is identified, one user may then schedule the event in his or her calendar application, and initiate a meeting invitation for the other participants. Further, other parties may choose not to use a calendar application to send their own meeting invitations, instead choosing to transmit details by e-mail or instant message. It is therefore left to the recipient of the message to read the message, identify the proposed meeting time, determine his or her availability, and respond to the organizer accordingly.

### GENERAL

The embodiments described herein may provide methods and systems for identifying and scheduling events, such as calendar events, in response to messages and other data items received at or retrieved from a user's communication device. The events may comprise meetings, appointments, tasks, reminders or alarms for the user, and optionally may involve other parties. The events may or may not be associated with a location or destination. For ease of reference, these various events will be referred to as "events" or "scheduled events" and are generally associated with a date and time. These embodiments will be described primarily in relation to a user device that is a mobile communication device, although it will be appreciated by those skilled in the art that this description is not intended to limit the scope of the described embodiments to such communication devices. The methods and systems described herein may be applied to any appropriate communication or data processing device, whether portable or wirelessly enabled or not, including without limitation cellular phones, smartphones, wireless organizers, personal digital assistants, desktop computers, terminals, laptops, tablets, handheld wireless communication devices, notebook computers and the like. Further, while the embodiments below are described primarily in relation to events such as appointments and meetings, it will also be appreciated by those skilled in the art that the below systems and methods may be implemented with other user data, and including messaging formats and transports such as SMS, MMS, voicemail, VVM, and other network message formats, such as those that may be used in instant messaging (IM).

Accordingly, in a first embodiment, there may be provided an improved method for displaying a data item at a communication device. The method in this aspect may provide for identifying, in the data item, content relating to an event; determining event date information for said event-related content; querying at least one event data store accessible to the communication device to determine, using the event date information, an availability status for said event; and displaying at the communication device at least a portion of the data item comprising the event-related content, the event-related content thus displayed being visually associated with an indication of the availability status determined for said event. In a further embodiment identifying the event-related content, determining the event date information, and querying the at least one event data store may be carried out at a host system in communication with the communication device, the host system comprising the at least one event data store.

According to another aspect, determining the event date information may comprise scanning the event-related content for at least one string representative of a date or time; determining whether the at least one string identifies an absolute start date and time, and if the at least one string does not identify an absolute date, determining the absolute start date and time using at least one default setting; and determining either an end time or a duration for the event. In a further embodiment, the absolute start date and time may be determined with reference to a datestamp of the data item.

In a further aspect, determining the event date information may comprise scanning the event-related content for at least one string representative of a specific event; matching the at least one string to stored event information, the stored event information comprising the event date information; and associating the stored event information with the event-related content. In a further embodiment, the stored event information may be disassociated from the event-related content and further event date information may be determined for association with the event-related content from data item content.

According to another aspect, the portion of the data item may be displayed using a first colour or pattern if it is determined that the availability status for said event is available, and in a second colour or pattern if it is determined that the availability status for said event is unavailable.

According to another aspect, the communication device may be configured to receive messages associated with a plurality of user accounts, the data item may be a message associated with a first user account, and the at least one event data store queried may be an event data store associated with the first user account. The data item may be a message with at least one recipient, and a meeting request event data item may be created in response to an instruction received at the communication device when the event-related content is displayed in association with the indication of availability status. The meeting request event data item may then be transmitted to the at least one recipient.

There may also be provided a computer program product comprising a non-transitory storage medium storing code which, when executed, causes a communication device to carry out the method of identifying, in a data item received at the communication device, content relating to an event determining event date information for said event-related content; querying at least one event data store accessible to the communication device to determine, using the event date information, an availability status for said event; and displaying at the communication device at least a portion of the data item comprising the event-related content, the event-related content thus displayed being visually associated with an indication of the availability status determined for said event.

The embodiments herein may further provide a communication device, comprising a memory comprising at least one event data store; a display; an input interface; a processor in communication with the memory, display and input interface, the processor being configured to: identify, in a data item stored at the communication device, content relating to an event; determine event date information for said event-related content; query the at least one event data store to determine, using the event date information, an availability status for said event; and display at least a portion of the data item comprising the event-related content on the display, the event-related content thus displayed being visually associated with an indication of the availability status determined for said event. The communication device and/or its processor and memory stores may furthermore be adapted to carry out the method described above.

There may further be provided a system, comprising a communication device with a memory for storing at least one data item; a display; an input interface; and a processor in communication with the memory, display, and input interface; and a server system in communication with the communication device and comprising a memory storing at least one event data store. The server system may be configured to receive a data item on behalf of the communication device; identify, in the data item, content relating to an event; determine event date information for said event-related content; query the at least one event data store to determine, using the event date information, an availability status for said event; and transmit the data item with the availability status for said event to the communication device. The communication device may be configured to receive the data item and the availability status, and then display at least the portion of the data item comprising the event-related content on the display such that the event-related content is visually associated with an indication of the availability status determined for the event. The communication device of the system in this embodiment may be configured to carry out the aforementioned methods.

### Brief Description of the Drawings

In drawings which illustrate by way of example only embodiments of the present application,

FIG. 1 is a block diagram of an embodiment of a mobile device.

FIG. 2 is a block diagram of an embodiment of a communication subsystem component of the mobile device of FIG. 1.

FIG. 3 is an exemplary block diagram of a node of a wireless network for use with the mobile device of FIG. 1.

FIG. 4 is a block diagram illustrating components of a host system in one exemplary configuration for use with the wireless network of FIG. 3 and the mobile device of FIG. 1.

FIGS. 5A to 5C are representative views of graphical user interfaces for displaying messages and scheduling information on the mobile device of FIG. 1.

FIGS. 6A to 6G are further representative views of graphical user interfaces for displaying messages and scheduling information on the mobile device.

FIG. 7A is a representative view of a graphical user interface for handling scheduling on the mobile device.

FIG. 7B is a representative view of a graphical user interface for viewing or editing stored event information.

FIG. 7C is a representative view of a graphical user interface for handling a meeting request on the mobile device.

FIG. 7D is a representative view of a graphical user interface for viewing or editing a meeting request.

FIGS. 8A to 8F are representative partial views of graphical user interfaces for displaying different types of messages or other content containing event-related information.

FIGS. 9A to 9D are representative view of graphical user interfaces for displaying messages or other content and scheduling information.

FIG. 10 is a representative view of a graphical user interface for viewing or editing scheduling and event-related data.

FIG. 11 is a flowchart of a process for identifying event-related indicators in a message or other content and indicating availability for those events.

FIGS. 12A is a flowchart of a process for identifying event-related information in a message or other content for use in a query.

FIGS. 12B and 12C are flowcharts of processes for identifying duration information for use in a query.

FIG. 12D is a flowchart of a process for identifying an event in a message or other content.

FIG. 12E is a flowchart of a process for indicating a conflict based on stored event information.

FIG. 13A is a flowchart of a process for handling instructions to create an appointment.

FIG. 13B is a flowchart of a process for handling instructions to create a meeting invitation.

FIG. 13C is a flowchart of a process for handling an incorrect event instruction.

FIG. 13D is a flowchart of a process for handling instructions to delete an appointment.

### Description

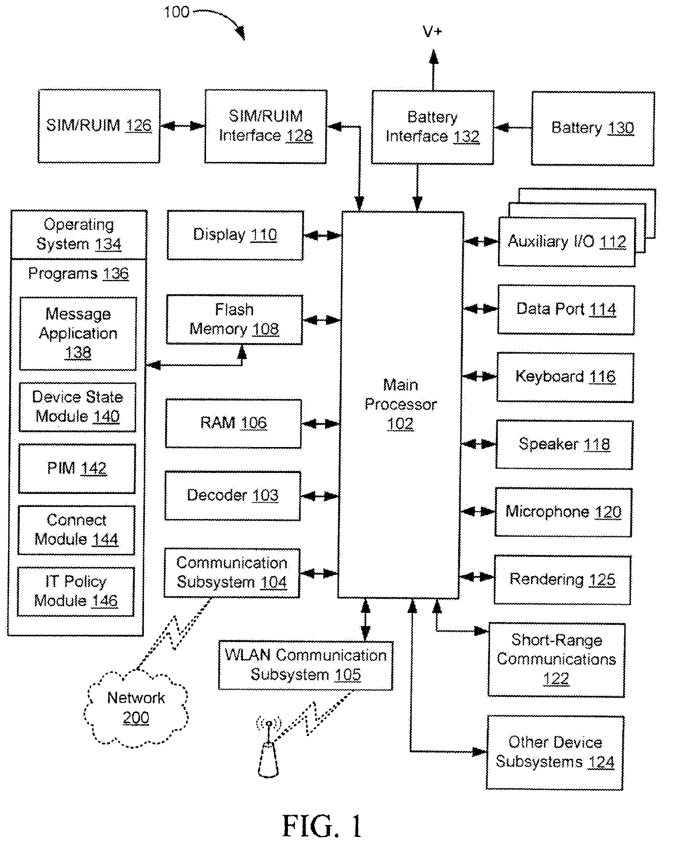

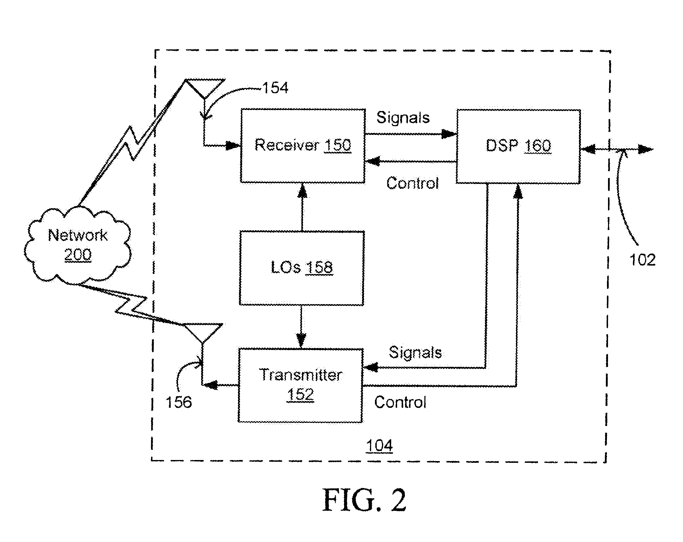

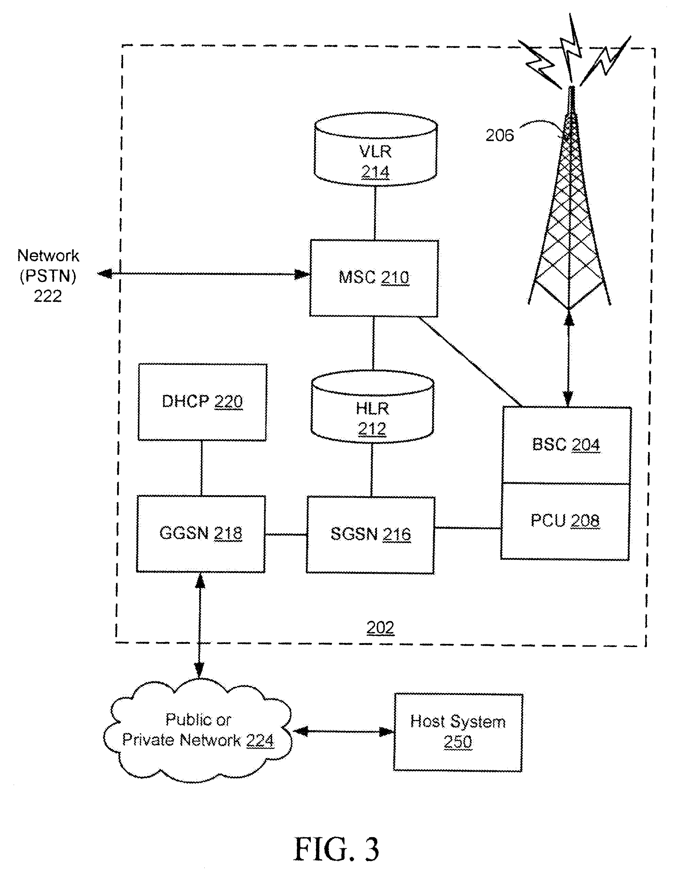

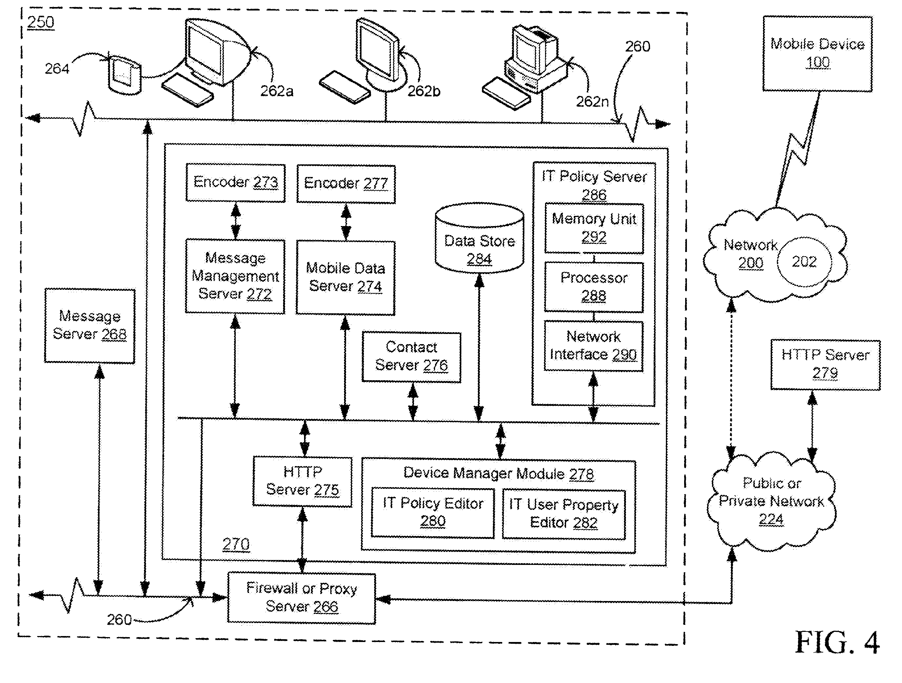

The embodiments described herein may be implemented on a communication device such as that illustrated in FIGS. 1 and 2. The communication device may communicate with other devices over a wireless communication system or enterprise system as illustrated in FIGS. 3 and 4. The communication device 100 may be a mobile device with two-way communication and advanced data communication capabilities including the capability to communicate with other mobile devices or computer systems through a network of transceiver stations. The communication device 100 can also have voice communication capabilities.

FIG. 1 is a block diagram of an exemplary embodiment of a communication device 100. The communication device 100 includes a number of components such as a main processor 102 that controls the overall operation of the communication device 100. Communication functions, including data and voice communications, are performed through a communication subsystem 104. Data received by the communication device 100 can be decompressed and decrypted by decoder 103, operating according to any suitable decompression techniques, and encryption/decryption techniques according to various standards, such as Data Encryption Standard (DES), Triple DES, or Advanced Encryption Standard (AES)). Image data is typically compressed and decompressed in accordance with appropriate standards, such as JPEG, while video data is typically compressed and decompressed in accordance with appropriate standards, such as H.26x and MPEG-x series standards.

The communication subsystem 104 receives messages from and sends messages to a wireless network 200. In this exemplary embodiment of the communication device 100, the communication subsystem 104 is configured in accordance with one or more of Global System for Mobile Communication (GSM), General Packet Radio Services (GPRS) standards, Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM, GPRS, EDGE, or UMTS, and optionally other network communications. With newer network protocols, these channels are capable of supporting both circuit switched voice communications and packet switched data communications.

Other wireless networks can also be associated with the communication device 100 in variant implementations. The different types of wireless networks that can be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks, third-generation (3G) networks like EDGE, HSPA, HSPA+, EVDO and UMTS, or fourth-generation (4G) networks such as LTE and LTE Advanced. Some other examples of data-centric networks include WiFi 802.11™, Mobitex™ and DataTAC™ network communication systems. Examples of other voice-centric data networks include Personal Communication Systems (PCS) networks like GSM and Time Division Multiple Access (TDMA) systems. The mobile device 100 may be provided with additional communication subsystems, such as the wireless LAN (WLAN) communication subsystem 105 also shown in FIG. 1. The WLAN communication subsystem may operate in accordance with a known network protocol such as one or more of the 802.11™ family of standards developed by IEEE. The communication subsystem 105 may be separate from, or integrated with, the communication subsystem 104 or with the short-range communications module 122. The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, the short-range communications 122 and other device subsystems 124.

Some of the subsystems of the communication device 100 perform communication-related functions, whereas other subsystems can provide "resident" or on-device functions. By way of example, the display 110 and the keyboard 116 can be used for both communication-related functions, such as entering a text message for transmission over the network 200, and device-resident functions such as a calculator or task list.

A rendering circuit 125 is included in the device 100. When a user specifies that a data file is to be viewed on the display 110, the rendering circuit 125 analyzes and processes the data file for visualization on the display 110. Rendering circuit 125 may be implemented as hardware, software, or as a combination of both hardware and software.

The communication device 100 can send and receive communication signals over the wireless network 200 after required network registration or activation procedures have been completed. Network access is associated with a subscriber or user of the communication device 100. To identify a subscriber, the communication device 100 requires a SIM/RUIM card 126 (i.e. Subscriber Identity Module or a Removable User Identity Module) to be inserted into a SIM/RUIM interface 128 in order to communicate with a network. The SIM/RUIM card 126 is one type of a conventional "smart card" that can be used to identify a subscriber of the communication device 100 and to personalize the communication device 100, among other things. Without the SIM/RUIM card 126, the communication device 100 is not fully operational for communication with the wireless network 200. By inserting the SIM/RUIM card 126 into the SIM/RUIM interface 128, a subscriber can access all subscribed services. Services can include: web browsing and messaging such as e-mail, voice mail, Short Message Service (SMS), and Multimedia Messaging Services (MMS). More advanced services can include: point of sale, field service and sales force automation. The SIM/RUIM card 126 includes a processor and memory for storing information. Once the SIM/RUIM card 126 is inserted into the SIM/RUIM interface 128, it is coupled to the main processor 102. In order to identify the subscriber, the SIM/RUIM card 126 can include some user parameters such as an International Mobile Subscriber Identity (IMSI). An advantage of using the SIM/RUIM card 126 is that a subscriber is not necessarily bound by any single physical mobile device. The SIM/RUIM card 126 can store additional subscriber information for a mobile device as well, including datebook (or calendar) information and recent call information. Alternatively, user identification information can also be programmed into the flash memory 108.

The communication device 100 may be a battery-powered device including a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the communication device 100. Although current technology makes use of a battery, future technologies such as micro fuel cells can provide the power to the communication device 100.

The communication device 100 also includes an operating system 134 and software components 136 to 146 which are described in more detail below. The operating system 134 and the software components 136 to 146 that are executed by the main processor 102 are typically stored in a persistent store such as the flash memory 108, which can alternatively be a read-only memory (ROM) or similar storage element (not shown). Those skilled in the art will appreciate that portions of the operating system 134 and the software components 136 to 146, such as specific device applications, or parts thereof, can be temporarily loaded into a volatile store such as the RAM 106. Other software components can also be included, as is well known to those skilled in the art.

The subset of software applications 136 that control basic device operations, including data and voice communication applications, will normally be installed on the communication device 100 during its manufacture. Other software applications include a message application 138 that can be any suitable software program that allows a user of the communication device 100 to send and receive electronic messages. Various alternatives exist for the message application 138 as is well known to those skilled in the art. Messages that have been sent or received by the user are typically stored in the flash memory 108 of the communication device 100 or some other suitable storage element in the communication device 100. In at least some embodiments, some of the sent and received messages can be stored remotely from the device 100 such as in a data store of an associated host system that the communication device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the communication device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items can be seamlessly integrated, synchronized, and updated via the wireless network 200 with the mobile device subscriber's corresponding data items stored and/or associated with a host computer system. This functionality creates a mirrored host computer on the communication device 100 with respect to such items. This can be particularly advantageous when the host computer system is the mobile device subscriber's office computer system.

The communication device 100 also includes a connect module 144, and an information technology (IT) policy module 146. The connect module 144 implements the communication protocols that are required for the communication device 100 to communicate with the wireless infrastructure and any host system, such as an enterprise system, that the communication device 100 is authorized to interface with. Examples of a wireless infrastructure and an enterprise system are given in FIGS. 3 and 4, which are described in more detail below.

The connect module 144 includes a set of Application Programming Interfaces (APIs) that can be integrated with the communication device 100 to allow the communication device 100 to use any number of services associated with the enterprise system. The connect module 144 allows the communication device 100 to establish an end-to-end secure, authenticated communication pipe with the host system. A subset of applications for which access is provided by the connect module 144 can be used to pass IT policy commands from the host system to the communication device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the communication device 100. These software applications can be third party applications, which are added after the manufacture of the communication device 100. Examples of third party applications include games, calculators, utilities, etc.

The additional applications can be loaded onto the communication device 100 through at least one of the wireless network 200, the auxiliary I/O subsystem 112, the data port 114, the short-range communications subsystem 122, or any other suitable device subsystem 124. This flexibility in application installation increases the functionality of the communication device 100 and can provide enhanced on-device functions, communication-related functions, or both. For example, secure communication applications can enable electronic commerce functions and other such financial transactions to be performed using the communication device 100.

The data port 114 enables a subscriber to set preferences through an external device or software application and extends the capabilities of the communication device 100 by providing for information or software downloads to the communication device 100 other than through a wireless communication network. The alternate download path can, for example, be used to load an encryption key onto the communication device 100 through a direct and thus reliable and trusted connection to provide secure device communication. The data port 114 can be any suitable port that enables data communication between the communication device 100 and another computing device. The data port 114 can be a serial or a parallel port. In some instances, the data port 114 can be a USB port that includes data lines for data transfer and a supply line that can provide a charging current to charge the battery 130 of the communication device 100.

The short-range communications subsystem 122 provides for communication between the communication device 100 and different systems or devices, without the use of the wireless network 200. For example, the subsystem 122 can include an infrared device and associated circuits and components for short-range communication. Examples of short-range communication standards include standards developed by the Infrared Data Association (IrDA), Bluetooth™, and the 802.11™ family of standards.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber can also compose data items, such as e-mail messages, for example, using the keyboard 116 in conjunction with the display 110 and possibly the auxiliary I/O subsystem 112. The auxiliary subsystem 112 can include devices such as: a touchscreen, mouse, track ball, infrared fingerprint detector, or a roller wheel with dynamic button pressing capability. The keyboard 116 may be an alphanumeric keyboard and/or telephone-type keypad. However, other types of keyboards can also be used. A composed item can be transmitted over the wireless network 200 through the communication subsystem 104. It will be appreciated that if the display 110 comprises a touchscreen, then the auxiliary subsystem 112 may still comprise one or more of the devices identified above.

For voice communications, the overall operation of the communication device 100 is substantially similar, except that the received signals are output to the speaker 118, and signals for transmission are generated by the microphone 120. Alternative voice or audio I/O subsystems, such as a voice message recording subsystem, can also be implemented on the communication device 100. Although voice or audio signal output is accomplished primarily through the speaker 118, the display 110 can also be used to provide additional information such as the identity of a calling party, duration of a voice call, or other voice call related information.

FIG. 2 shows an exemplary block diagram of the communication subsystem component 104. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the communication device 100 is intended to operate. Thus, it should be understood that the design illustrated in FIG. 2 serves only as one example.

Signals received by the antenna 154 through the wireless network 200 are input to the receiver 150, which can perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 can be adaptively controlled through automatic gain control algorithms implemented in the DSP 160.

The wireless link between the communication device 100 and the wireless network 200 can contain one or more different channels, typically different RF channels, and associated protocols used between the communication device 100 and the wireless network 200. An RF channel is a limited resource that should be conserved, typically due to limits in overall bandwidth and limited battery power of the communication device 100. When the communication device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods. Other communication subsystems, such as the WLAN communication subsystem 105 shown in FIG. 1, may be provided with similar components as those described above configured for communication over the appropriate frequencies and using the appropriate protocols.

FIG. 3 is a block diagram of an exemplary implementation of a node 202 of the wireless network 200. In practice, the wireless network 200 comprises one or more nodes 202. In conjunction with the connect module 144, the communication device 100 can communicate with the node 202 within the wireless network 200. In the exemplary implementation of FIG. 3, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable mobile devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the communication device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from mobile devices within its cell via the station 206. The fixed transceiver equipment normally performs such functions as modulation and possibly encoding and/or encryption of signals to be transmitted to the communication device 100 in accordance with particular, usually predetermined, communication protocols and parameters, under control of its controller. The fixed transceiver equipment similarly demodulates and possibly decodes and decrypts, if necessary, any communication signals received from the communication device 100 within its cell. Communication protocols and parameters can vary between different nodes. For example, one node can employ a different modulation scheme and operate at different frequencies than other nodes.

For all communication devices 100 registered with a specific network, permanent configuration data such as a user profile is stored in the HLR 212. The HLR 212 also contains location information for each registered mobile device and can be queried to determine the current location of a mobile device. The MSC 210 is responsible for a group of location areas and stores the data of the mobile devices currently in its area of responsibility in the VLR 214. Further, the VLR 214 also contains information on mobile devices that are visiting other networks. The information in the VLR 214 includes part of the permanent mobile device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each communication device 100. The SGSN 216 also performs security functions and access control for data traffic on the wireless network 200. The GGSN 218 provides internetworking connections with external packet switched networks and connects to one or more SGSNs 216 via an Internet Protocol (IP) backbone network operated within the network 200. During normal operations, a given communication device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a communication device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each communication device 100 must be assigned to one or more APNs and communication devices 100 cannot exchange data without first performing a GPRS Attach to an APN that it has been authorized to use. The APN can be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (Ipsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a communication device 100 is not using its PDP Context, the PDP Context can be de-allocated and the IP address returned to the IP address pool managed by the DHCP server 220.

FIG. 4 is a block diagram illustrating components of an exemplary configuration of a host system 250 with which the communication device 100 can communicate in conjunction with the connect module 144. The host system 250 will typically be a corporate enterprise or other local area network (LAN), but can also be a home office computer or some other private system, for example, in variant implementations. In the example shown in FIG. 4, the host system 250 is depicted as a LAN of an organization to which a user of the communication device 100 belongs. Typically, a plurality of mobile devices can communicate wirelessly with the host system 250 through one or more nodes 202 of the wireless network 200.

The host system 250 comprises a number of network components connected to each other by a network 260. For instance, a user's desktop computer 262a with an accompanying cradle 264 for the user's communication device 100 is situated on a LAN connection. The cradle 264 for the communication device 100 can be coupled to the computer 262a by a serial or a Universal Serial Bus (USB) connection, for example. Other user computers 262b-262n are also situated on the network 260, and each can be equipped with an accompanying cradle 264. The cradle 264 facilitates the loading of information (e.g. PIM data, private symmetric encryption keys to facilitate secure communications) from the user computer 262a to the communication device 100, and can be particularly useful for bulk information updates often performed in initializing the communication device 100 for use. The information downloaded to the communication device 100 can include certificates used in the exchange of messages.

It will be understood by persons skilled in the art that the user computers 262a-262n are typically also connected to other peripheral devices, such as printers, etc., which are not explicitly shown in FIG. 4. Furthermore, only a subset of network components of the host system 250 are shown in FIG. 4 for ease of exposition, and it will be understood by persons skilled in the art that the host system 250 will comprise additional components that are not explicitly shown in FIG. 4 for this exemplary configuration. More generally, the host system 250 can represent a smaller part of a larger network (not shown) of the organization, and can comprise different components and/or be arranged in different topologies than that shown in the exemplary embodiment of FIG. 4.

To facilitate the operation of the communication device 100 and the wireless communication of messages and message-related data between the communication device 100 and components of the host system 250, a number of wireless communication support components 270 can be provided. In some implementations, the wireless communication support components 270 can include a message management server 272, a mobile data server 274, a web server, such as Hypertext Transfer Protocol (HTTP) server 275, a contact server 276, and a device manager module 278. HTTP servers can also be located outside the enterprise system, as indicated by the HTTP server 279 attached to the network 224. The device manager module 278 includes an IT Policy editor 280 and an IT user property editor 282, as well as other software components for allowing an IT administrator to configure the communication devices 100. In an alternative embodiment, there can be one editor that provides the functionality of both the IT policy editor 280 and the IT user property editor 282. The support components 270 also include a data store 284, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the communication devices 100. The memory unit 292 can store functions used in implementing the IT policy as well as related data. Those skilled in the art know how to implement these various components. Other components can also be included as is well known to those skilled in the art. Further, in some implementations, the data store 284 can be part of any one of the servers.

In this exemplary embodiment, the communication device 100 communicates with the host system 250 through node 202 of the wireless network 200 and a shared network infrastructure 224 such as a service provider network or the public Internet. Access to the host system 250 can be provided through one or more routers (not shown), and computing devices of the host system 250 can operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the communication device 100. The wireless VPN router allows a VPN connection to be established directly through a specific wireless network to the communication device 100. The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An advantage of using a wireless VPN router is that it can be an off the-shelf VPN component, and does not require a separate wireless gateway and separate wireless infrastructure. A VPN connection may be a Transmission Control Protocol (TCP)/IP or User Datagram Protocol (UDP)/IP connection for delivering the messages directly to the communication device 100 in this alternative implementation.

Messages intended for a user of the communication device 100 are initially received by a message server 268 of the host system 250. Such messages can originate from any number of sources. For instance, a message can have been sent by a sender from the computer 262b within the host system 250, from a different mobile device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly e-mail messages, within the organization and over the shared network infrastructure 224. Each user in the organization that has been set up to send and receive messages is typically associated with a user account managed by the message server 268. Some exemplary implementations of the message server 268 include a Microsoft Exchange™ server, a Lotus Domino™ server, a Novell Groupwise™ server, or another suitable mail server installed in a corporate environment. In some implementations, the host system 250 can comprise multiple message servers 268. The message server 268 can also be adapted to provide additional functions beyond message management, including the management of data associated with calendars and task lists, for example.

When messages are received by the message server 268, they are typically stored in a data store associated with the message server 268. In at least some embodiments, the data store can be a separate hardware unit, such as data store 284, with which the message server 268 communicates. Messages can be subsequently retrieved and delivered to users by accessing the message server 268. For instance, an e-mail client application operating on a user's computer 262a can request the e-mail messages associated with that user's account stored on the data store associated with the message server 268. These messages are then retrieved from the data store and stored locally on the computer 262a. The data store associated with the message server 268 can store copies of each message that is locally stored on the communication device 100. Alternatively, the data store associated with the message server 268 can store all of the messages for the user of the communication device 100 and only a smaller number of messages can be stored on the communication device 100 to conserve memory. For instance, the most recent messages (i.e. those received in the past two to three months for example) can be stored on the communication device 100.

When operating the communication device 100, the user may wish to have e-mail messages retrieved for delivery to the communication device 100. The message application 138 operating on the communication device 100 can also request messages associated with the user's account from the message server 268. The message application 138 can be configured (either by the user or by an administrator, possibly in accordance with an organization's IT policy) to make this request at the direction of the user, at some pre-defined time interval, or upon the occurrence of some pre-defined event. In some implementations, the communication device 100 is assigned its own e-mail address, and messages addressed specifically to the communication device 100 are automatically redirected to the communication device 100 as they are received by the message server 268.

The message management server 272 can be used to specifically provide support for the management of messages, such as e-mail messages, that are to be handled by mobile devices. Generally, while messages are still stored on the message server 268, the message management server 272 can be used to control when, if, and how messages are sent to the communication device 100. The message management server 272 also facilitates the handling of messages composed on the communication device 100, which are sent to the message server 268 for subsequent delivery.

For example, the message management server 272 can monitor the user's "mailbox" (e.g. the message store associated with the user's account on the message server 268) for new e-mail messages, and apply user-definable filters to new messages to determine if and how the messages are relayed to the user's communication device 100. The message management server 272 can also, through an encoder (not shown) associated therewith, compress message data, using any suitable compression/decompression technology (e.g. YK compression, JPEG, MPEG-x, H.26x, and other known techniques) and encrypt messages (e.g. using an encryption technique such as Data Encryption Standard (DES), Triple DES, or Advanced Encryption Standard (AES)), and push them to the communication device 100 via the shared network infrastructure 224 and the wireless network 200. The message management server 272 can also receive messages composed on the communication device 100 (e.g. encrypted using Triple DES), decrypt and decompress the composed messages, re-format the composed messages if desired so that they will appear to have originated from the user's computer 262a, and re-route the composed messages to the message server 268 for delivery.

Certain properties or restrictions associated with messages that are to be sent from and/or received by the communication device 100 can be defined (e.g. by an administrator in accordance with IT policy) and enforced by the message management server 272. These may include whether the communication device 100 can receive encrypted and/or signed messages, minimum encryption key sizes, whether outgoing messages must be encrypted and/or signed, and whether copies of all secure messages sent from the communication device 100 are to be sent to a pre-defined copy address, for example.

The message management server 272 can also be adapted to provide other control functions, such as only pushing certain message information or pre-defined portions (e.g. "blocks") of a message stored on the message server 268 to the communication device 100. For example, in some cases, when a message is initially retrieved by the communication device 100 from the message server 268, the message management server 272 can push only the first part of a message to the communication device 100, with the part being of a pre-defined size (e.g. 2 KB). The user can then request that more of the message be delivered in similar-sized blocks by the message management server 272 to the communication device 100, possibly up to a maximum pre-defined message size. Accordingly, the message management server 272 facilitates better control over the type of data and the amount of data that is communicated to the communication device 100, and can help to minimize potential waste of bandwidth or other resources.

The mobile data server 274 encompasses any other server that stores information that is relevant to the corporation. The mobile data server 274 can include, but is not limited to, databases, online data document repositories, customer relationship management (CRM) systems, or enterprise resource planning (ERP) applications. The mobile data server 274 can also connect to the Internet or other public network, through HTTP server 275 or other suitable web server such as a File Transfer Protocol (FTP) server, to retrieve HTTP webpages and other data. Requests for webpages are typically routed through mobile data server 274 and then to HTTP server 275, through suitable firewalls and other protective mechanisms. The web server then retrieves the webpage over the Internet, and returns it to mobile data server 274. As described above in relation to message management server 272, mobile data server 274 is typically provided, or associated, with an encoder 277 that permits retrieved data, such as retrieved webpages, to be decompressed and compressed, using any suitable compression technology (e.g. YK compression, JPEG, MPEG-x, H.26x and other known techniques), and encrypted (e.g. using an encryption technique such as DES, Triple DES, or AES), and then pushed to the communication device 100 via the shared network infrastructure 224 and the wireless network 200. While encoder 277 is only shown for mobile data server 274, it will be appreciated that each of message server 268, message management server 272, and HTTP servers 275 and 279 can also have an encoder associated therewith.

The contact server 276 can provide information for a list of contacts for the user in a similar fashion as the address book on the communication device 100. Accordingly, for a given contact, the contact server 276 can include the name, phone number, work address and e-mail address of the contact, among other information. The contact server 276 can also provide a global address list that contains the contact information for all of the contacts associated with the host system 250.

It will be understood by persons skilled in the art that the message management server 272, the mobile data server 274, the HTTP server 275, the contact server 276, the device manager module 278, the data store 284 and the IT policy server 286 do not need to be implemented on separate physical servers within the host system 250. For example, some or all of the functions associated with the message management server 272 can be integrated with the message server 268, or some other server in the host system 250. Alternatively, the host system 250 can comprise multiple message management servers 272, particularly in variant implementations where a large number of mobile devices need to be supported.

The device manager module 278 provides an IT administrator with a graphical user interface with which the IT administrator interacts to configure various settings for the communication devices 100. As mentioned, the IT administrator can use IT policy rules to define behaviors of certain applications on the communication device 100 that are permitted such as phone, web browser or Instant Messenger use. The IT policy rules can also be used to set specific values for configuration settings that an organization requires on the communication devices 100 such as auto signature text, WLAN/VoIP/VPN configuration, security requirements (e.g. encryption algorithms, password rules, etc.), specifying themes or applications that are allowed to run on the communication device 100, and the like.

Rendering data files originally optimized or prepared for visualization on large-screen displays on a portable electronic device display often requires additional processing prior to visualization on the small-screen portable electronic device displays. According to an embodiment, this additional processing is accomplished by the rendering engine 125 shown in FIG. 1. As will be appreciated by those of skill in the art, the rendering engine can be implemented in hardware, software, or a combination thereof, and can comprise a dedicated image processor and associated circuitry, or can be implemented within main processor 102.

As noted above, functionality for organizing and managing data items such as, but not limited to, scheduled events including meetings, appointments, tasks and alarms may be provided by a calendar or PIM application. Data pertaining to such scheduled events may be received by the communication device 100 either by direct input by a user of the device 100; through synchronization of a calendar or PIM data store stored in the memory of the communication device 100 with the corresponding data store of a host system; or via a message transmitted by a sender, such as an organizer of the scheduled event, to the communication device 100. The communication device 100 may then store the scheduled event data in its local calendar or other data store, such as a PIM data store. While the content of each scheduled event entry stored at the device 100 may vary, generally such scheduled events may comprise a start time and either and end date or a duration of the event, a title or subject, and information relating to any participants in the event. Not all of this data is necessary, however, for a valid scheduled event to be recorded in the local data store. For example, if the scheduled event is an alarm—i.e., an event that does not necessarily have any duration—then only a start time for the event may be required. Scheduled events created and/or stored at the communication device 100 may be displayed and managed using a graphical user interface having a calendar-type or agenda-type format.

A user of a communication device 100 may, from time to time, receive requests to participate in an event, such as an appointment, meeting, task or alarm, as mentioned above. A common means of receiving such an inquiry is a meeting "request" or "invitation", which comprises an electronic file containing information regarding the proposed meeting or other event. The file may be provided in accordance with a standard format, such as the iCalendar format defined in RFC 5545 and published by the Internet Engineering Task Force or the older vCalendar format published by the Internet Mail Consortium. The file may be received by a messaging client, such as an e-mail client, as an attachment, and may be processed by the messaging client or by a calendar or other PIM application executing at the user's device 100 to extract the event information, and to either present the event information to the user or store the event information in the user's calendar. In some cases, the event information may be automatically extracted and stored in the user's calendar, although the user may first be queried to confirm whether the information should be stored, and the time in the user's calendar reserved for that event (i.e., whether the event should be "accepted" or "declined"). Once the event information is acted on at the communication device 100, for example by the user accepting the meeting request, an acknowledgement message may be transmitted to the sender of the meeting request. If, however, the proposed date or time of an event is not acceptable to the recipient of the request, the recipient will either decline the request, or use a function in the messaging client or calendar application to generate and transmit a message in reply attaching another meeting request with a proposed alternate time. Similarly, the user of the communication device 100 may create and transmit similar meeting requests to others.

In practice, however, such events are not always coordinated or planned exclusively using meeting request messages. It is not uncommon for prospective participants to discuss planned events over different media, such as e-mail, SMS, IM, and the like, not only to establish agenda items or to discuss possible venues, but also to decide on a commonly available date and/or time. Participants in the conversation may transmit reply and/or forwarding messages in response to received messages, proposing and counter-proposing times, dates, and venues. Even a single message may contain a number of proposed alternative times to be considered by the other participants. A user of a communication device 100 receiving a number of these messages and viewing them using a messaging application may then be required to launch a calendar or other application expressly to check his or her availability for the various dates or times proposed. If there are a number of proposed times within a single message, the user may be required to task switch repeatedly between the messaging application and the calendar or other application to view each proposed date or time, and then check availability for that particular date or time. Similarly, if a different date or time is proposed in each message received at the device, the calendar application may need to be invoked, or the user interface of the communication device 100 switched to the calendar application, each time the communication device 100 receives such a message. The repeated task switching or application launching may consume additional memory, processor, and/or power resources on the communication device. These additional resources may also be consumed in the case where the user of the communication device 10 wishes to send proposed dates or times to others, since he or she may need to repeatedly switch between a calendar application and a messaging application to verify his or her own availability, then transcribe the information in the message.

Further, the use of meeting requests in accordance with the iCalendar standard or using similar formats presumes that the other parties to the conversation are using similar calendar applications, or at least calendar applications that are compatible with the chosen meeting request file format. In practice, however, other participants may be using communication devices equipped with non-compatible calendar applications or only with messaging functions, such as SMS. The transmission of meeting requests as attachments may therefore be rejected by the recipient's message server, stripped off prior to delivery to the recipient's communication device, or simply not recognized by the recipient's device applications. In addition, discussions of dates or times for meetings and other events may arise in the context of an unrelated or casual electronic message-based conversation. Requiring a user to task switch to a calendar application to verify availability for the purpose of negotiating a date or time may therefore disrupt the natural flow of conversation between the parties, introducing delays while a user pauses to check availability for the various times proposed in a message.

In some cases, the events discussed in the conversation may not be expressly referred to by date or time, but rather by event name or type. Accordingly, it is left up to the user of the communication device 100 receiving a message referring to such an event to remember the date or time of the specified event prior to checking his or her availability for the event. While the pertinent information about the event may already be stored at the communication device 100, this requires the user to perform searches in one or more data stores on the device 100 to retrieve the appropriate information, and then to switch to a calendar or other application on the device 100 to determine his or her availability. Again, these extra steps many not only inconvenience the user, but may also consume resources of the communication device 100.

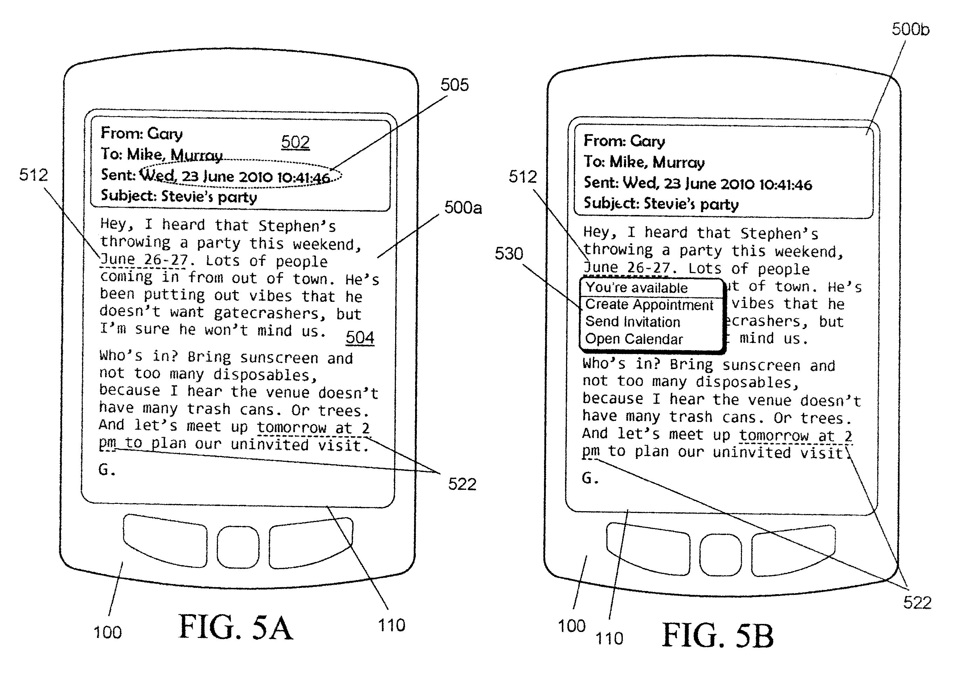

Accordingly, FIGS. 5A through 5C provide examples of user interfaces that may be displayed on a communication device 100, such as a mobile communication device, for use with the embodiments described herein to allow for the identification of potential events discussed in messages and other content displayed at the communication device 100, and the storage of such events in a data store for display using a calendar or other application. A simple example is shown in FIG. 5A, in which a user interface 500a displays a message, such as an e-mail message, received at the device 100. The message may include a header portion 502 and a body portion 504. The header portion 502 may include a time of transmission or receipt of the message, including contact information (e.g. addresses, "friendly" names) of the sender and any addressees of the message. If the message is an e-mail, it may confirm to the Internet Message Format RFC 5322 published by the Internet Engineering Task Force (IETF), and/or with its predecessor and successor standards, which provide for such headers. The message may also comply with extensions to the base e-mail format such as Multipurpose Internet Mail Extensions (MIME) as set out in RFC 2045 to 2049, and contain content other than plain text. The body portion 504 may contain the content of the message, and may be provided in a suitable format, such as plaintext, RTF, or HTML. Of course, as noted above, the message may be provided in a different format, but these three formats are commonly used in e-mail messages in particular. It will be appreciated by those skilled in the art that the content of the message illustrated in the drawings is representative, and that the message may comprise other elements not depicted for clarity.

A messaging application user interface such as the user interface 500a shown in FIG. 5A may display both the header 502 and body 504, but in some embodiments not all of the header content may be visible, if any of the header 502 is visible at all. At least a portion of the body 504 may be visible in the user interface 500a. If the body 504 includes additional content that is not displayable given the dimensions of the user interface 500a or the size and resolution of the display 110, the user interface 500a may be navigable using one or more input means so that a remainder of the body 504 may be displayed. A user interface element such as a scroll bar, not shown, may be displayed in the user interface 500a to indicate the availability of additional content to be viewed.

The content of the message body 504 may comprise information relating to a possible event, such as a meeting, appointment, task, or the like. Accordingly, the content may include strings that are words, abbreviations, phrases, numbers, or combinations thereof that are indicative of dates or times. For example, the message body 504 in FIG. 5A includes the strings "this weekend" which contains the word "weekend", "June 26" or "June 26-27", "tomorrow", and "at 2 pm". One or more of these strings may represent a date or time of an event. Therefore, the messaging application displaying the message in the user interface 500a, or another process invoked at the communication device 100, may automatically scan the message to identify any strings indicative of a date or time. The process may also be configured to scan the content for other strings representing words, phrases, and the like indicative of specific events, such as "meeting". The precise configuration of the communication device 100, and the implementation of such a process in the messaging application, in a background process managed by the device's operating system 134, or by another process, may be implemented according to the requirements of the operating system 134 and applications executable on the device 100, as will be understood by those of ordinary skill in the art. For ease of reference the module or component, whether software or hardware, carrying out these steps, is referred to as a process.

Upon detection of such date, time or specific event indicator (referred to herein generally as an "event indicator" or "identified string"), event date information, which may comprise a start time, and end time, and a duration, is associated with the identified event indicator. The start time and end time may themselves comprise an absolute date value, such as a day, month, year, and time, and the duration may be implicitly defined as the difference between the end and start times. One or more of the start time, end time, and duration may be determined explicitly from the identified string; the remaining information may be determined based on default rules or other settings, as explained below. The identified event indicator may then be identified in the user interface 500a, for example with a visual indicator such as underlining. In the example of FIG. 5A, the phrase "June 26-27" is visually indicated at 512 with dashed underlining, and the phrase "tomorrow at 2 pm" is likewise visually indicated at 522. The visual indicator may thus function as an indicator that the identified string has been associated with event date information. In particular, the visual indicator may serve as an indicator that the identified string is actuatable in the user interface 500a to carry out further steps, as described below.

The content of the event indicator may be parsed to identify a specific start date and/or time and either a duration or an end date and/or time. The duration may be identified from the context of the identified string within the message; for example, in "June 26-27", an inference may be drawn that the duration of the event spans the entirety of the two days, or at least spans the entirety of the typical working hours or daylight hours of the two days. If no duration can be determined from the message, then a default period, such as 24 hours (when the event indicator or its context only indicates a date, but no specific start time) or half an hour or an hour (when the event indicator or its context indicates a specific start time), may be associated with the identified event indicator. In the case of "tomorrow at 2 pm", a start time may be determined from the string itself (2 pm); however, no duration of the event may be discernible from the message. Accordingly, the process may associate a default duration with this particular event indicator, and thereby determine an end time for the event as the identified start time plus the default duration time.

Once the event indicators identified in the message have been associated with event date information, the process may then query a calendar store or another data store available to the communication device 100 to determine whether, according to the data store, the user is available for the time period now associated with the event indicator, as defined by the event date information. If the time period does not conflict with an event already stored in the calendar or other data store, then the user is deemed to be "available" for that period. Otherwise, the user is deemed to be "unavailable". In a further embodiment, a determination whether there is an actual conflict may depend on user status associated with a previously stored event scheduled during the same time slot as the identified event in the message or other data item. For example, event data items may be stored in the data store in association with an indicator that the user is to be considered "busy", "free", "tentative" (tentatively available), or "out of office" for the duration of the corresponding event. In this embodiment, when the process determines based on the response to the data store query that a previously stored event data item overlaps in time with the time period associated with the event indicator, the process may determine that the event is in conflict, and the user is thus "unavailable", only when the status of the user associated with the previously stored event data item is indicated as "busy" or "out of office".

The data store queried may be a data store for a user account associated with the communication device 100. If there is more than one user account associated with the device 100, the data store used may be a store associated with the same account as that receiving the message, although in some embodiments, more than data stores for more than one messaging account may be checked depending on any rules in place for the process. For example, the communication device 100 may be provisioned with both personal and business messaging accounts, and service entry points provide in a user interface of the device 100 may permit a user to view an inbox representing only the personal account, only the business account, or both. If the message of FIG. 5A is opened from an inbox configured to display only messages associated with one account, then it may be only the calendar or other data store associated with that account that is queried for availability. If the message is opened from a unified inbox displaying messages from both accounts, then the process may query the calendar or other data stores for both the business and personal account for availability. However, the selection of the data store to be queried may be manually set to force the process to query any one or more of the data stores for availability. In some embodiments, the data store queried may not be local to the communication device 100 at all, but may instead be resident within the host system 250, or alternatively in a different repository accessible over the public or private network 224, described above with reference to FIGS. 3 and 4.

As mentioned above, the strings identified as event indicators may be made actuatable in the user interface. Turning to FIG. 5B, the same message is displayed in the user interface 500b, again with the identified strings "June 26-27" 512 and "tomorrow at 2 pm" 522 displayed with a visual indicator. When the communication device 100 receives an instruction via an input device-whether via a trackball, trackpad or other navigation means, or via a detected gesture or tap if the display 110 is a touchscreen—to move focus in the user interface 500b to one or the other of the two identified strings 512, 522, in addition to moving focus to that string 512, 522, a further user interface element such as an context information display 530 may be displayed in the user interface 500b. The information display 530 may display such as the availability of the user (as determined based on a query of the calendar or other data store or stores, as described above). In the example of FIG. 5B, the information display 530 indicates that the user is available for the event identified at 512.

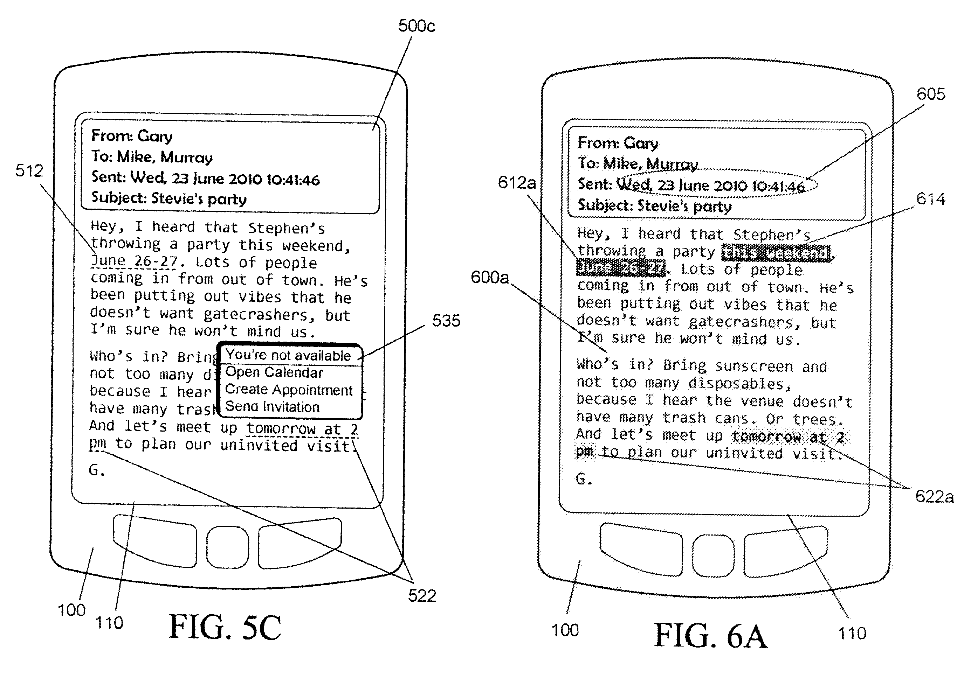

In addition, the information display 530 may also include selectable options for further actions, such as creating an appointment to be stored in the calendar or other data store, or sending a meeting invitation or request based on the event date information associated with the identified event. The information display 530 may also optionally include a selectable option to invoke a calendar application to view the user's calendar for the relevant date or dates of the identified event. These options may be selectable in response to detected instructions received at the communication device 100 when the particular string 512, 522 is in focus and the information display 530 is displayed. FIG. 5C illustrates a similar user interface 500c, again displaying the identified strings 512, 522, where the second string 522 is in focus, and an information display 535 is displayed, this time indicating that the user is not available. Again, the information display 535 may include selectable options such as invoking the calendar application, creating an appointment, or sending a meeting request.

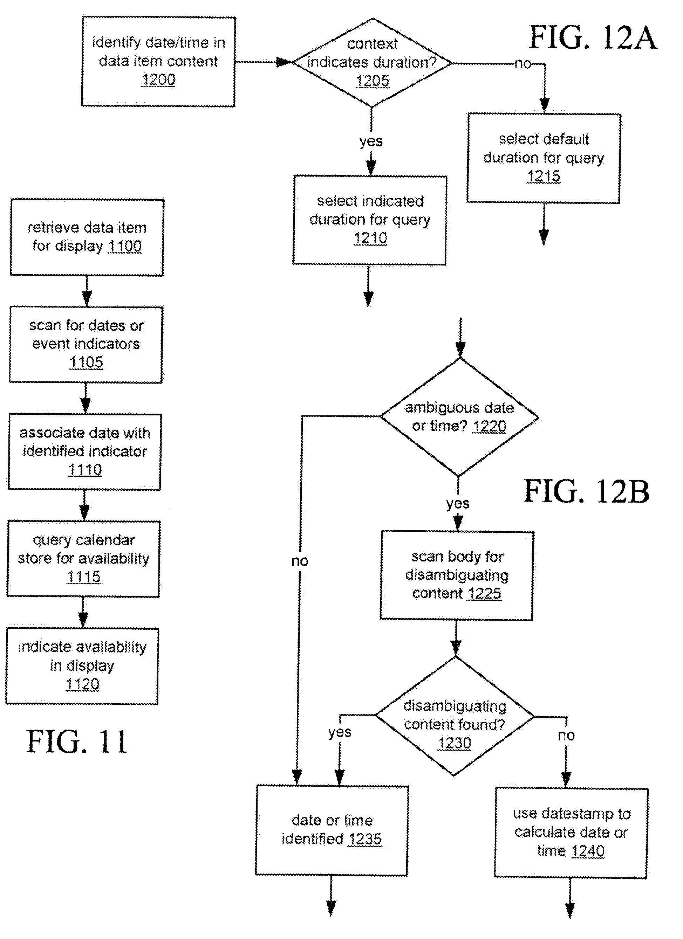

FIG. 11 illustrates the general steps of the process described with reference to FIGS. 5A to 5C. The communication device 100 may first retrieve a data item, such as a message, for display at 1100. At 1105, the message or other data item may then be scanned for date, time or event indicators. If such event indicators are located, then at 1110 they are associated with event date information. The calendar store, or another event data store at the communication device 100, may then be queried at 1115 to determine the availability status for the event identified in the event indicator, by determining whether the time period defined by the event date information is "available", i.e. not in conflict with a currently booked event, as represented by stored event data items. In a further variant, the query may also be used to determine whether there are any previously booked events that are adjacent to the period associated with the event indicator-that is, whether there are already events scheduled that will end immediately before the start time of the event identified by the event indicator, or that will start immediately after the event identified by the event indicator. Adjacent events may be of interest to a user, since the user may need to budget for time to travel between one scheduled appointment and another.

At 1120, the availability status (and optionally the existence of adjacent appointments) is indicated in the user interface, and in particular may be visually indicated so that a user of the communication device 100 may determine at a glance whether the associated date or time is free. Thus, for example, if there are no other events in conflict, at 1120 the data item may be displayed with the event indicator highlighted, underlined, or otherwise demarcated using a first colour or pattern representing availability. If there is an event in conflict that is already stored in the calendar or other data store, then the event indicator in the data item may be demarcated with a second colour or pattern representing a status of conflict or no availability. Alternatively, an icon or other user interface element may be displayed inline with the event indicator in the data item, such as a checkmark if the query at 1115 determines that the status is available, and an "x" if the status is not available. If the user interface element included inline with the event indicator includes text content—for example, the text "(Available)" or "(Unavailable")—or other content capable of being rendered for non-visual perception by a user using assistive technology implemented on the communication device 100, then the availability status may be ascertained by the user even when the user peruses the data item using non-visual means, such as a screen reader. The event indicator may thus be demarcated non-visually within the data item. As a further alternative, a visual indicator may not be readily visible without action on the part of the user, as described with reference to FIGS. 5B and 5C. The examples of FIGS. 5B and 5C included an information display 530, 535 that may be automatically displayed whenever an identified string is in focus, but in an alternative implementation, when one of the strings 512, 522 is in focus or is expressly selected via the user interface 500b, 500c a context menu containing similar information and options may be invoked in another location of the display 110.

The portion of the process of associating the event date information with the identified event indicator is illustrated generally in FIG. 12A. At 1200, an absolute start date and time associated with the event indicator is identified in the data item. At 1205, it is determined whether the context of the event indicator in the data item indicates a duration for the event, whether by explicitly identifying a duration, or an end time for the event. If it is determined that the context provides duration information, then at 1210 this duration is selected for the event date information associated with the event indicator. If not, then a default duration is selected at 1215. The process may then proceed to query the calendar or other data store for availability based on the event date information, as described with reference to FIG. 11.

To accomplish the identification of potential events in the message or other data item, the device operating system 134 or the application displaying the message or other data item may be implemented with a text parsing engine or lexical analyzer engine, optionally in combination with a spellchecking or autotext engine, if provided on the device 100. The analyzer engine may use a lexicon file stored at the communication device 100 containing common terminology used in messages to designate times or dates (such as "september", "sept", and "sep", for the month of September; "monday" and "mon" for Monday; "am", "a.m.", "a m", "in the morning" and "morning" to indicate time periods before midday). The terminology may be case independent. The lexicon file may correlate each term to partial event date information (for example, the lexicon file may correlate the string "mon" to the value "Monday" or another value that may subsequently be inserted in a string or date object to identify a Monday). The lexicon file may also include terminology that may be used to designate dates or times that may be determined relative to a base date or time, such as "in an hour", "in a day", "tomorrow", "next", "next week", and "days from now". Also, as will be discussed in further detail below, the lexicon file may also include terminology used to identify specific occurrences, such as "meeting", "birthday", and "anniversary", and optionally possessive words such as "my" or "your". The lexicon file may contain terminology only for one language, or may include alternate languages. If the lexicon contains terminology in multiple languages, the process may be configured to only search terminology in a language matching regional settings at the communication device 100.

The device 100 may also store rules for identifying alphanumeric patterns indicative of dates or times, such as the use of a colon to separate hours and minutes or minutes and seconds (e.g., HH:MM), indicators of time durations (e.g., use of "to" between numbers such as "26th to 27th", or dashes such as "26-27"), different date and time formats (e.g., HHMM, YYMMDD, DDMMYY), and the use of numbers in the proximity of lexicon words to indicate specific dates (e.g., numbers preceding or following the string "June").

In scanning the message, the process may therefore match strings in the data item to entries in the lexicon. If a match is identified, the string may be correlated to an absolute, non-relative date, time, or range thereof. To accomplish this correlation, additional context may be identified in the message. For example, if the string "June" is initially identified in the message body 504, the process may also scan a number of characters either preceding or following "June", or both, to determine if a specific date or time range is identified. In the example of FIG. 5A, the word "June" is followed by "26-27". The process may therefore parse the string "June 26-27" as identifying a period spanning two days in June. The process may further scan the surrounding context in the message body 504 to determine whether a specific time range is identified in association with the identified string "June 26-27". If nothing further is found, the process may thus identify "June 26-27" as the string indicating a potential event date or time.

The context required to identify the date or time may not be found exclusively in the message body 504. For example, the message body 504 also contains the word "tomorrow". The process may also identify this string in the body 504, and may then correlate this string to a specific date based on the information in the message header 502. Typically, if the sender of a message refers to "tomorrow" or a similar relative term (e.g., "two days from now", "next week"), the sender intends the date referenced to be determined with reference to the date and time of composition of the data item. If the data item is a received message, this date and time is usually reflected in the received header 502 of the message, although it will be understood that in some cases the date and time in the header 502 may not be the same date or approximate time at which the message was initially composed. This may be due to delay introduced by the transmission of the message over a network from the sender to the recipient or by the message sender deliberately composing the message some time in advance of transmission. Generally, however, it may be presumed at least that the date in the message header 502 is a sufficiently accurate starting point for determining an absolute date or time value. Thus, if the process identifies the term "tomorrow" in the message body 504 as a possible date for an event, the process may obtain a datestamp from the message header 502, and use the datestamp to calculate an absolute start date to be associated with "tomorrow". In the example of FIG. 5A, since the header 502 displays a sent date 505 of 23 June 2010, the process may associate the "tomorrow" in the body 504 with a start date of 24 June 2010.

Even content that appears to absolutely identify a specific date or time, such as "June 26-27", may be ambiguous, since the term or phrase may refer to one or more instances of the same date or time. For example, "8:30" appearing in the body 502 may refer to either 8:30 a.m. or 8:30 p.m., and may refer to this time on any day; "Tuesday" may refer to a previous or upcoming Tuesday, and not necessarily the first Tuesday following the current date; and "September" may refer to any one of September 2010, 2011, and so on. Thus, when the process identifies a string identifying a potential event, the process may also scan the context of the string to determine whether there exists any disambiguating content. For example, if the word "next" precedes "Tuesday", or if a number accompanies a specified day (e.g., "Tuesday 22" or "Tuesday 22nd"), a specific date may be ascertained. In the first example, "next" may be associated in the lexicon file with an instruction to determine the next calendar occurrence of a Tuesday, so the date associated with the event indicator may be the date that corresponds to the Tuesday immediately following the date indicated by the message datestamp if the message datestamp is used as the basis for computing relative dates, or immediately following the current date if a message datestamp is not used as the basis. In the second example, the date associated with the event indicator may be the next Tuesday 22nd that will occur, whether it is in the present month or a future month.

In other cases, the content of the message or other data item may not provide sufficient context to disambiguate a date or time reference. The process may then apply a default rule, in which the event indicator is associated with the next matching occurrence of the date or time identified in the string, based either on the current date or on the datestamp of the message or other data item. This portion of the process is illustrated in FIG. 12B. Upon identification of a date or time in a string, it is determined at 1220 whether the date or time identified is ambiguous, for example, whether the identified string and its context provides for an absolute association with a unique value representing date and time according to a selected time standard such as UTC. If it is determined that the identified date or time is not ambiguous, then a unique, absolute date or time has been identified at 1235, and this date or time may be associated with the event indicator in the event date information. If the identified date or time is ambiguous, then at 1225 the message body 504 (or the content of the data item, if the data item is not a message) is scanned for additional disambiguating content, for example a reference to "this week" or "next week". At 1230, it is determined whether any disambiguating content has been found that permits the association of the identified date or time with a single, absolute date or time value. If so, then the unique, absolute date or time as has been identified at 1235, and again, this date or time may be associated with the event indicator. If no disambiguating content is found, then at 1240 the process uses its default rules to determine an unambiguous date or time (for example, using the next occurrence of the identified date or time immediately following the datestamp of the message or the current date and time). This new unambiguous date or time is then associated with the event indicator.

Those skilled in the art will appreciate that the portion of the process for determining the duration of the event may precede the disambiguation of the date or time indicated in the identified string, or that the disambiguation may take place at the same time or prior to the determination of the duration. In other embodiments, the scanning of the content and identification of potential events may be carried out elsewhere, such as in the host system 250. If this scanning and identification is carried out in the host system 250, it may be carried out for messages destined for the communication device 100 prior to actual delivery of the message to the communication device 100. Thus, the message delivered to the communication device 100 may be altered by the host system 250 to include pointers to date or time ranges in the calendar or other data store associated with the device 100, or identifiers of specific date or time ranges in the header 502, body 504, or in a further envelope enclosing the message data for transmission to the device 100. Thus, at least steps 1105 and 1100 of FIG. 11 may be carried out in the host system 250, and the remaining steps carried out at the communication device 100. If the host system 250 has access to a copy of the calendar or other event data store associated with the device 100 that is used to determine availability status based on the event date information, then the host system 250 may also carry out step 1115 on behalf of the communication device 100, and may transmit the message or other data item to the device 100 together with an indicator of availability for each identified string in the message or data item.

The user interface described with reference to FIGS. 5B and 5C may take other forms. For example, as described above, the identified strings in the message body 504 may be visually identified in the user interface using colours or other indicators that allow the user to determine immediately whether he or she is likely available during the event referenced in the message. In the example of FIGS. 6A through 6E, the identified strings are visually demarcated using highlighting. Where the process of FIG. 11 determines that the user is likely available, the identified strings are displayed in a first colour. In the user interface 600a of FIG. 6A, two strings 614 ("this weekend") and 612a ("June 26-27") have been highlighted in the first colour, indicating availability during the dates and times associated with these strings. In this example, the process may have associated "June 26-27" with a two-day-long period spanning June 26 and 27, 2010, based on the content of the string 612a, and with reference to the datestamp of the message itself, which includes a date and time 605 in 2010. Also, the process may have also associated "this weekend" with the same two-day-long period, based on a determination that the next "weekend" following the date 605 indicated in the message header is June 26-27, 2010, and optionally based on the use of the word "this" in the context of "weekend", which may be interpreted as indicating the weekend immediately following the datestamp of the message.

Also in FIG. 6A, the string 622a reading "tomorrow at 2 pm" has been highlighted in a second colour, which may indicate unavailability for the time period associated with this phrase, which may be determined by the process to be the day after the date indicated by the datestamp of the message (i.e., June 24, 2010), commencing at 2 o'clock in the afternoon, with a default duration according to any default settings established at the communication device 100. The process may default to identifying times and dates as being in the same current time zone as the device 100.

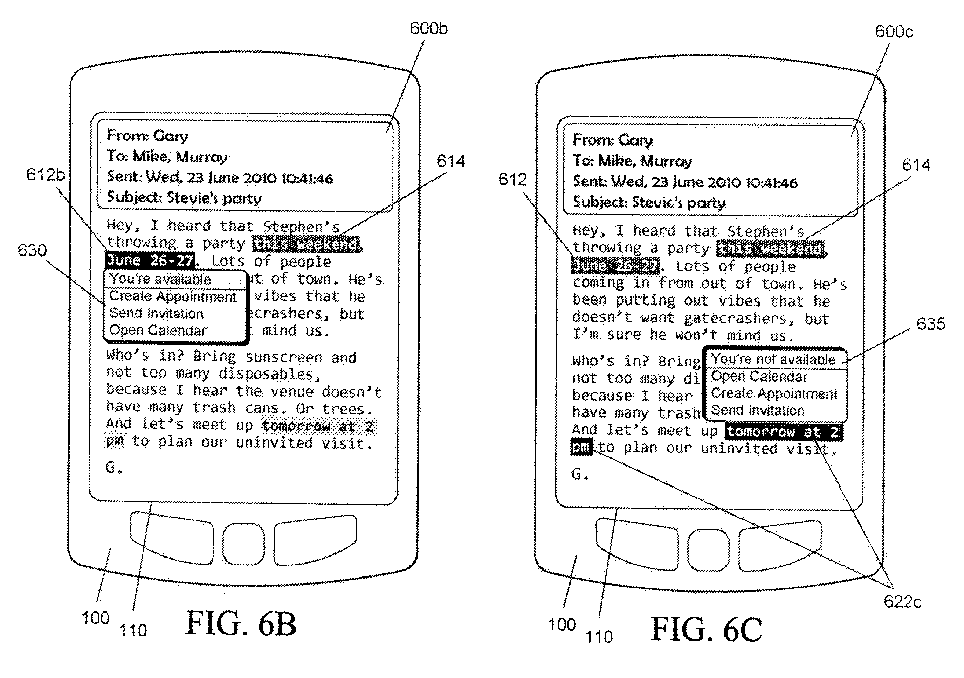

Since the identified strings in the message shown in the user interface 600a are visually indicated with a status of either "available" or "not available", it is not necessary for one of the strings to be selected or brought into focus by the user in order to display information about availability for the associated date and time. However, as described above with reference to FIGS. 5B and 5C, the highlighted strings 612a, 614, 622 may still be actuated to display an information display comprising further action options. FIG. 6B illustrates a further user interface 600b, where the string 612b, "June 26-27", has been brought into focus (this is indicated in FIG. 6B by a further highlighting colour). When the string 612b is in focus, an information display 630 may be displayed, providing options to either create an appointment in a calendar or other data store, transmit a meeting request in respect of the identified event to another person, or to open the user's calendar on the device 100. Similarly, FIG. 6C shows a further user interface 600c, in which the string 622c, "tomorrow at 2 pm", has been placed in focus. Accordingly, a further information display 635 may be visible in the display 110, again providing similar options.

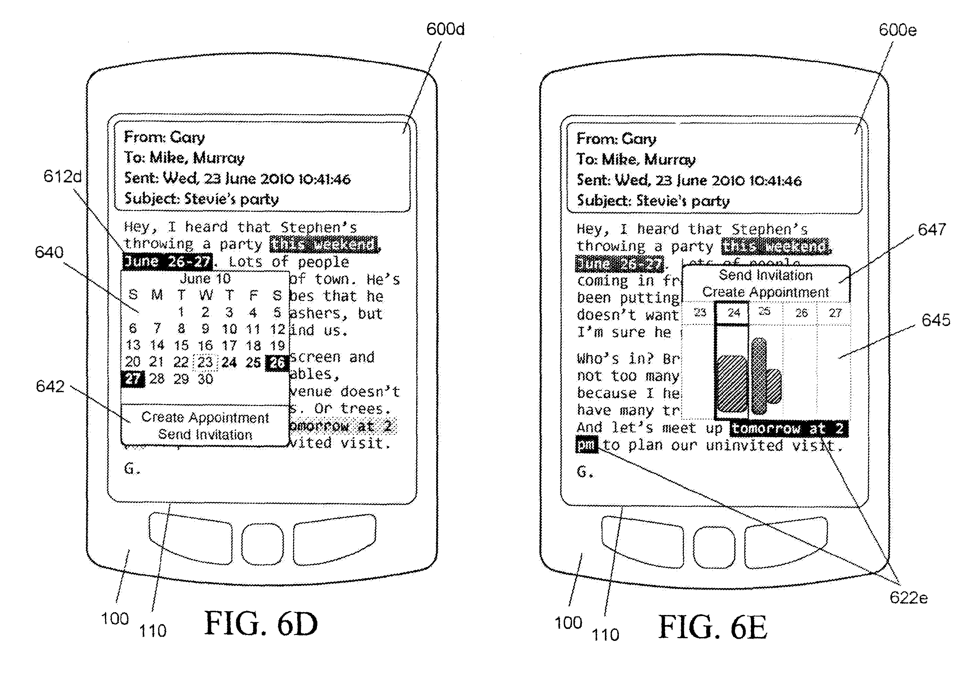

The information viewable on the display 110 may be provided with a different graphical presentation. FIG. 6D illustrates a further view of the information display. The same example message is displayed in the user interface 600d, again with the string 612d, "June 26-27", highlighted as being "available", and also in focus. In this example, the information display includes a calendar month view 640, as well as options 642 to either create an appointment or send a meeting request. The calendar month view 640 may be generated based on calendar data retrieved from the calendar store on the device 100, and may indicate availability on the various days of the relevant month. In this example, the current date may be differentiated from the other dates (in FIG. 6D, it is outlined in a dashed box); the dates identified in the identified string 612d may be highlighted to indicate availability; and other dates on which events have already been scheduled may also be visually distinguished in the calendar month view.

Similarly, FIG. 6E illustrates another user interface 600e, in which the identified string 622e, "tomorrow at 2 pm", is in focus, and the information display 645 displayed when the string 622e is in focus includes a calendar week view including the date associated with the string 622e. Again, the information display may also display options 647 to create an appointment to be stored in the communication device 100's calendar store, or to transmit a meeting invitation.

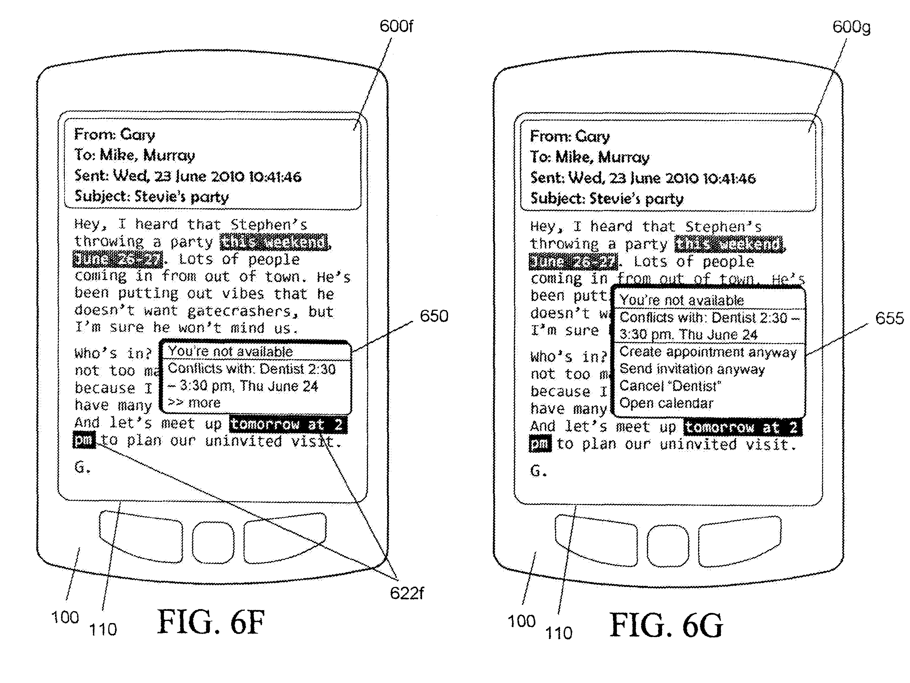

In a further example, the user interface 600f of FIG. 6F illustrates the same message, with the identified string 622f in focus. As described above, this particular string 622f has been associated with a time slot that was determined to not be available based on a query of the event data store. In this example, when the string 622f is in focus, a further information display 650 is displayed on the display 110, indicating not only the availability status associated with the string 622f, but also identifying the previously stored event with which the time slot associated with the string 622f conflicts. Regardless of the existence of the conflicting event, the user may still wish to create a new event data item based on the identified string 622f, or may wish to take some other action regarding the conflicting event. Thus, when this further information display 650 is displayed, in response to a further instruction received via an input interface the device 100 may then display further options illustrated in the information display 655 of FIG. 6G. An option in the display 655 may be selected to create an appointment or send a meeting invitation based on the data associated with the identified string; to cancel the previously scheduled conflicting event; or to launch a calendar view for further inspection. Selection of one of these options may invoke further dialog boxes or information displays for the user to confirm the selected action to be taken.

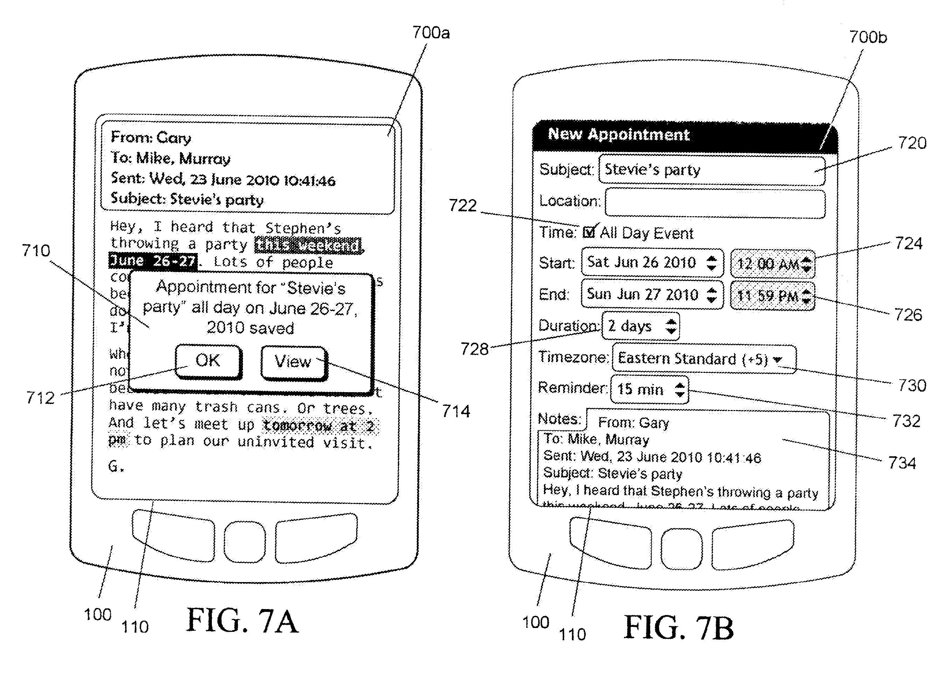

When an option to create an appointment or transmit a meeting request is selected, the communication device 100 may then store the relevant event data in a calendar or other store at the device 100, and/or generate and transmit a meeting request to one or more recipients for a meeting for the date and time associated with the identified string. The storage of the event data in the calendar store, or the generation and transmission of the meeting request, may be executed at the communication device 100 without requiring the operating system to task switch to the calendar application. Rather, the user interface for the messaging application, as shown in FIGS. 5B through 6G, may continue to be displayed instead. The communication device 100 may however be configured to display a confirmation window to notify the user when the create appointment or transmit meeting request action has been carried out. FIG. 7A shows an example of a possible confirmation window 710, which may be generated and displayed in the user interface 700a overlaying the message for which the appointment or meeting request was created. The confirmation window 710, in this example, may be generated and displayed in response to detection of an instruction to "create appointment" when the identified string "June 26-27" was in focus. Thus, the confirmation window 710 indicates that an appointment was created for an event given the same title as the subject of the message, and for the time period of June 26-27, 2010. In some embodiments, the confirmation window 710 may be dismissed in response to a simple user action, such as a tap, keyboard press, or trackball press, which may indicate to the device that the user has acknowledged the confirmation. In the example of FIG. 7A, the confirmation window 710 also includes an "OK" 712 and a "View" 714 button. Actuation of the "OK" button 712 may be interpreted by the communication device 100 as a command to dismiss the confirmation window 710 and to return to a complete view of the message visible in the user interface 700a. Actuation of the "View" button 714 may then invoke the calendar application or another scheduling application, to permit the user to view or edit the appointment details.

FIG. 7B illustrates an example of appointment details that may be displayed in response to actuation of the "View" button shown in the user interface 700a of FIG. 7A. The user interface 700b contains a number of fields, some of which may be automatically populated by the communication device 100 in response to the command to create an appointment. The subject field 720 in this example is populated with the subject line of the message shown in the examples of FIGS. 5A through 7A. The all-day event indicator 722, start time 724, end time 726, and duration 728 are also automatically populated with information such as start and end dates or times and duration determined from the event data information associated with the event indicator as described above. As the duration was determined to be a two-day-long period, the all-day event indicator 722 is enabled, the start time 724 and end time 726 are populated with the corresponding dates, and the duration field 728 is set at two days. The time fields within the start time 724 and end time 726, however, may be greyed out in this example since the event is designated as an all day event. If the event had not been designated as an all day event, the time fields could be populated with specific starting and ending times. The time zone field 730 and the reminder field 732 may also be populated with data drawn from the message, although these settings may be established using default settings at the communication device 100. Finally, the notes field 734 may be automatically populated with both the header and the body of the message from which the event data was taken, as shown in FIG. 7B, or alternatively only with the body of the message.

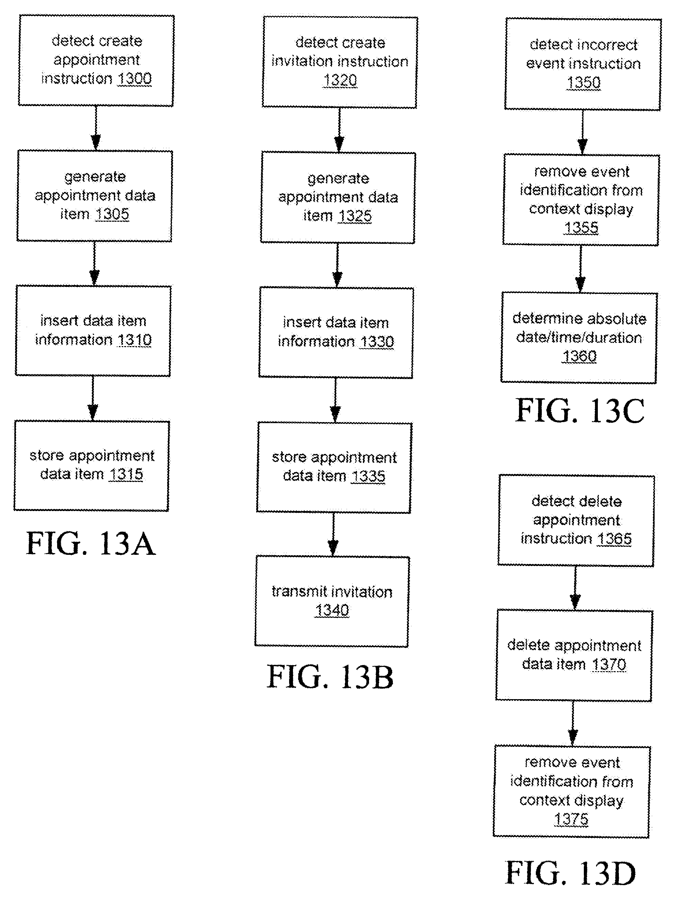

An example of the process followed by the communication device 100 in creating and storing an appointment is shown in FIG. 13A. At 1300, the communication device 100 detects a "create appointment" instruction. As mentioned above, this may be invoked through an information display listing selectable options such as creating an appointment. At 1305, an event data item, in this case a data item comprising appointment information, is generated, then populated with data at 1310. The event data item may, as described above, be generated with a name or subject matching the subject line of the message or other content in which the event had been identified. If the message does not have a subject line, then other content, such as the first line or the first predetermined number of characters from the message, may be used for the event name. As described above, event date information is associated with the identified event; this data is also used to populate the new event data item. In addition, content from the message may be inserted in a "notes" or similar field in the event data item. At 1315, the event data item is stored in the calendar or schedule data store at the communication device 100. The event data item may also be stored in a data store in the host system 250 instead or in addition to being stored at the communication device 100, for example if the data stores in the communication device 100 and the host system 250 are synchronized.

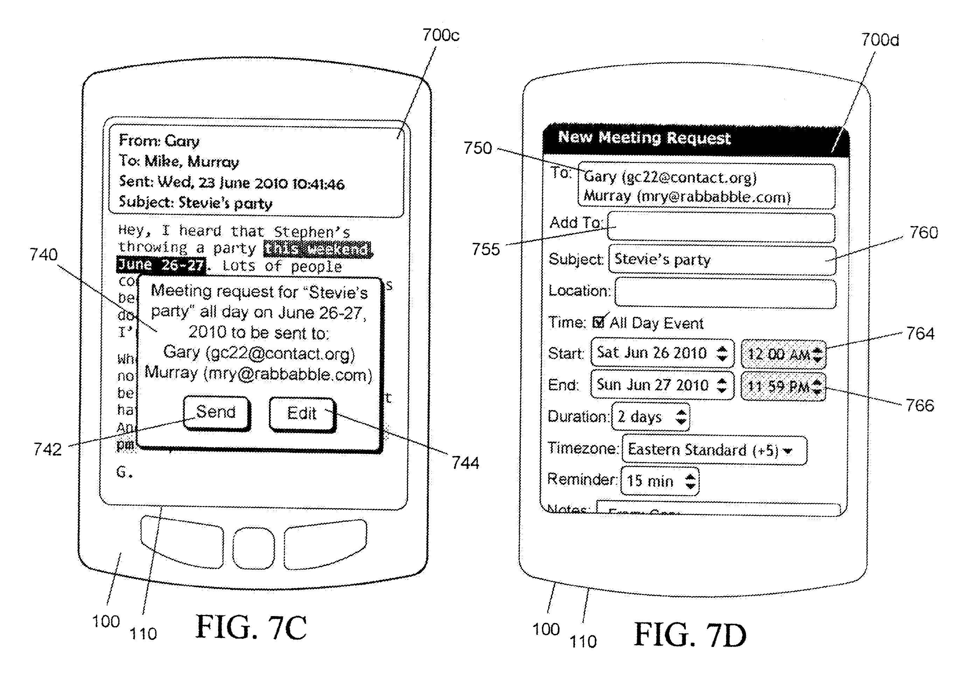

FIG. 7C illustrates a further example of a confirmation window 740 similar to that shown in FIG. 7A, but in response to the communication device 100's detection of an instruction to create and transmit a meeting request based on the identified event, which may be received one of the information displays described above. The user interface 700c shows the confirmation window 740 overlaying the message from which the event data was taken, confirming information similar to that shown in FIG. 7C: a meeting name taken from the subject line of the message, and a date and duration taken from the identified date and time from the message. Since the meeting request typically requires at least one recipient, the communication device 100 may be configured to automatically address the meeting request message to the other parties to the message. The contact names and/or addresses of these recipients may also be identified in the confirmation window 740. While the communication device 100 may be configured to automatically transmit the meeting request to the recipients without further intervention by the user, in the example of FIG. 7C, the confirmation window 740 is provided with buttons that may be actuated by the user to either send the meeting request as described (the "send" button 742), or to invoke the calendar application or another application to view and edit the meeting request details (the "edit" button 744). FIG. 7D illustrates a possible user interface 700d containing the meeting request details. Again, as with the user interface 700b described above, a number of fields may be pre-populated using the event data associated with the identified string in the message, such as the subject field 760 and the start and end times 764, 766. In addition, the user interface 700d may also include a list of the automatically included addressees 750, which may be edited by the user, as well as additional fields or user interface elements to receive additional data, such as additional recipients of the meeting request 755. Thus, the user may edit the meeting request prior to invoking a command to transmit the meeting request.

A process that may be followed by the communication device 100 in creating and transmitting a meeting request is shown in FIG. 13B. At 1320, the communication device 100 detects a "create meeting request" instruction. Again, this instruction may be invoked through actuation of an option displayed in an information display. At 1325, an event data item is generated, similar to the process of FIG. 13A, and populated with data from the message or other source of the event indicator at 1330. In this case, the event data item is also populated with invitee addresses, which may be taken from the contact addresses of the sender and recipients of the message or other source. At 1335, the event data item is stored in the local calendar or other data store at the communication device 100, and/or optionally stored at the host system 250. Finally, at 1340, a copy of the event data item may then be transmitted to each of the invitees via an appropriate message transport method, such as e-mail. The user may be provided with an opportunity to edit the content of the event data item prior to transmission, to add or delete invitees or other data. If the source of the data for the event data item is a message, then typically there will be at least one possible invitee that may be inserted into the event data item at step 1330 (assuming that the user of the device, who may be a sender or recipient of the message, is not also inserted as an invitee). If, however, the data source is not a message but some other type of electronic document, then no contact addresses may be available to be inserted into the event data item. In that case, the user may be requested via the user interface to select at least one invitee prior to the step of transmitting the invitation.

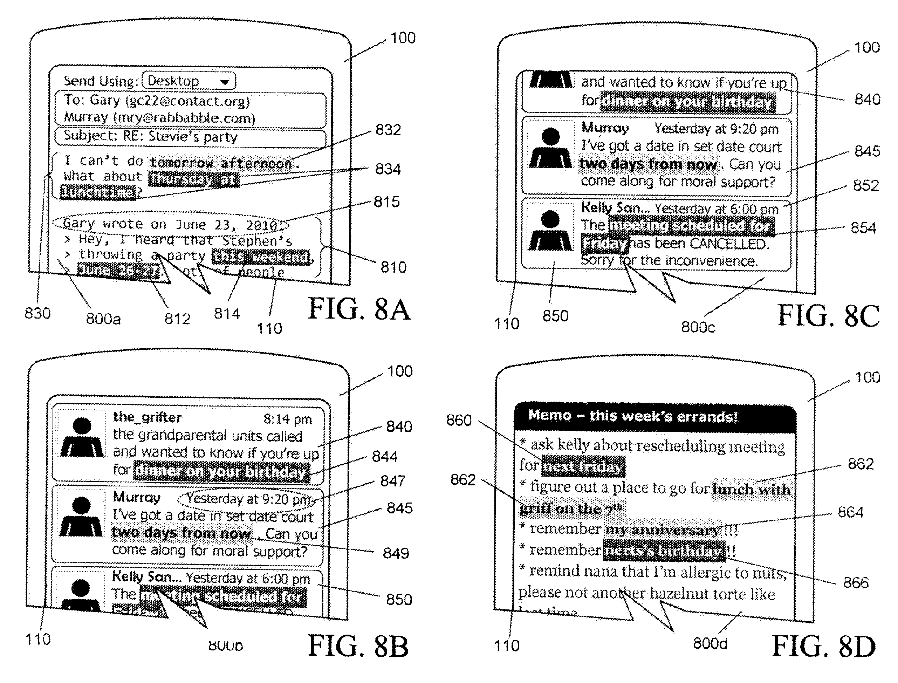

The previous examples illustrated the detection of events in a message received and displayed at the communication device 100. FIG. 8A illustrates an example of a message that is composed using the device 100. In this particular example, a partial view of the device 100, its display 110, and a user interface 800a displayed on the display 110 is shown. The message in this example is a reply to a message shown in the previous illustrations. When a message is composed in reply to a previously received message or to forward a previously received message to a recipient, the content of the previously received message may be appended to the newly-composed message, either within the new message body or as an attachment. It can be seen in this example that the previous message is replicated at least in part at 810 in the user interface 800a, following a header line 815 which in this case includes the name of the sender of the previous message, as well as date information reflecting the date at which the previous message had been sent or received. This content follows new message content 830 displayed in the user interface 800a.

When the message is displayed in the user interface 800a, the process may operate as described above to identify any strings in the message content indicative of a potential event, associate event date information with the identified string, and to query the calendar or other data store for availability information for the time duration defined by the event date information. This process may occur even as the message content 830 is being composed on the device 100. Thus, in this example, the strings "tomorrow afternoon" 832 and "Thursday at lunchtime" 834 have been identified in the new message content 830, and the strings "this weekend" 814 and "June 26-27" 812 have been identified in the replicated previous message content 810, which also appears in the user interface 800a. In accordance with the methods described above, the event date information determined for each of these strings may be computed using a message datestamp; however, in the case of a message that is still being composed, there is no final datestamp included in a message header, so the process may use the current date and time instead. "Tomorrow afternoon" 832 may therefore be associated with a time period during the afternoon of the day following the current date on which the message is being composed.

In a further variation, the process may also scan the message for indicators that the message content includes replicated previous message content 810, and may detect the presence of the replicated header line 815 containing a further date and/or time. The process may then make use of the date and/or time information in the header line 815, if present, to compute the absolute dates and/or times for the strings following the header line 815. Thus, the event date information for "this weekend" 810 and "June 26-27" 812 may be determined with reference to the date of June 23, 2010, as identified in the replicated header line 815. A similar process may be carried out on the communication device 100 when displaying a message composed at the device 100 that was previously saved at (and optionally sent from) the device 100. In that case, the process may use the datestamp that is associated with the message upon sending or saving to determine absolute values to be associated with the strings 832, 834.

Once these strings in the message are associated with event date information, the communication device 100 may, as described above, query the calendar or other store to determine whether time periods defined by the event date information are available, i.e. that there are no conflicts. The strings in the message 812, 814, 832, 834 may then be displayed with a visual indicator indicating the availability status for these event indicators, also as described above.

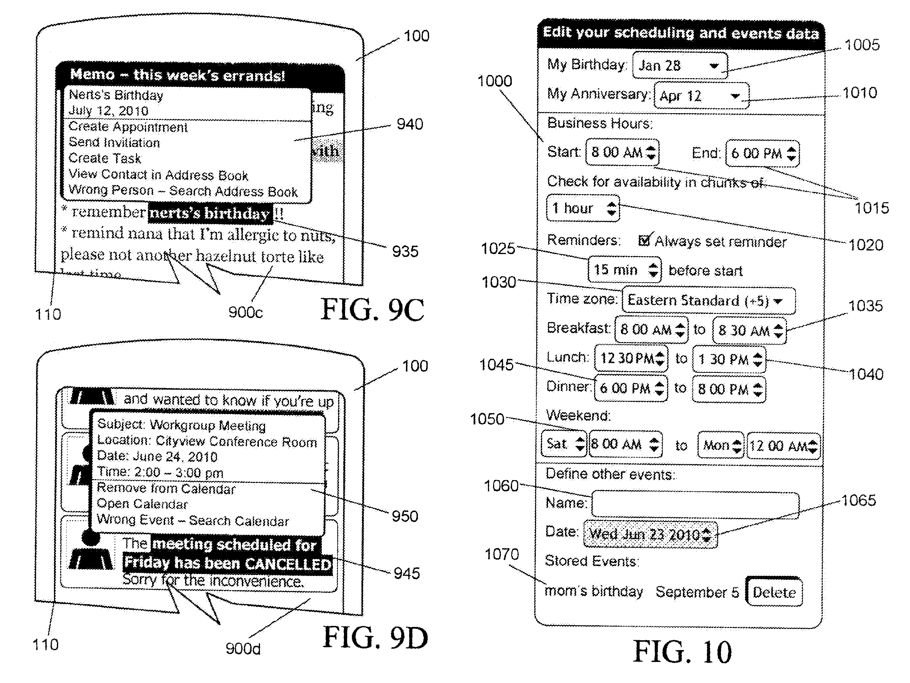

FIGS. 8B and 8C illustrate further examples of identifying events in other types of data items, such as instant messages or SMS messages. The user interface 800b of FIG. 8B depicts three messages 840, 845, 850. Each of the messages in this example may be displayed with a sender name or userid, a date and/or timestamp, and the message content. The first message 840 illustrates the use of the process to identify specific events and time periods by name, such as "dinner" and "birthday". In FIG. 8B, the phrase "dinner on your birthday" 844 is highlighted, indicating that this string has been identified as a potential event and has been associated with event date information. The word "dinner", for example, may be stored in the lexicon file or in another data store in association with a particular time period for any given day. The word "birthday" or phrases such as "your birthday" or "my birthday" may also be stored in association with a particular date, as described with reference to FIG. 10, described below. When one or more of these terms (e.g., "birthday" or "dinner") is identified in a string without any further context to indicate a date or time, the process may query the lexicon file or another data store accessible to the communication device 100 to determine the date, time and duration to be associated with these terms. The process may be configured to separately identify each term and associate it with event date information, or to infer an association between the two terms in a single string.

The second message 845 displayed in the user interface 800b includes the highlighted phrase "two days from now" 849. The process may be configured to recognize phrases such as this as potentially referring to an event, and may parse the phrase to determine that it is referring to a date commencing two days after the datestamp 847 of the message 845. As described above, the event indicators thus identified in the user interface 800b may then be displayed with a visual indicator indicating availability during their corresponding periods, based on queries of a calendar or other data store.

FIG. 8C illustrates a further view of the messages 840, 845, 850, in which the content displayed in the display 110 has been scrolled or paged down to show the third message 850 in its entirety in the user interface 800c. The message 850 illustrates a further example in which a specific event may be identified in the message by name and associated with a pre-existing event already stored in a calendar or other data store at the device. In this case, the phrase "meeting scheduled for Friday" 854 has been identified and associated with a specific event data item, for example by identifying event date information for the event in accordance with the process described above (i.e., determining an absolute start date and time and end date and time, based on the reference to "Friday" and, where necessary, with reference to the datestamp 852 of the message 850), and then by querying the calendar or other store for an event data item matching the identified string or its context.

A further example of a data item in which events may be identified is shown in FIG. 8D. In this example, a flat text file, such as a memo, is displayed in the user interface 800d, and the phrases "next friday" 860, "lunch with griff on the 7th" 862, "my anniversary" 864, and "nerts's birthday" 866 have each been identified as events within the file. Since there is no header comprising a datestamp for the file, dates and times may be calculated for strings such as "next friday" 860 with reference either to the date and/or time at which the file was originally created or last saved, or alternatively with reference to the current date and time. If dates and times are determined based on the current date and time, the date associated with the string "next friday" may change if the file is accessed displayed at the device 100 on a later date. The example of FIG. 8D also illustrates the detection of strings, such as "my anniversary" 864 and "nerts's birthday" 866, which may be associated with a predetermined date. These phrases may be stored in the lexicon in association with specific dates. The phrase "lunch with griff on the 7^{th,,} 862 may be detected as a complete phrase linking a first event indicator, "lunch", with a second event indicator, "on the 7^{th}". The former may be interpreted by the process, with reference to the lexicon, as referring to a particular time period during the day. The latter may be determined to be a reference to the next proximate seventh day of the month.

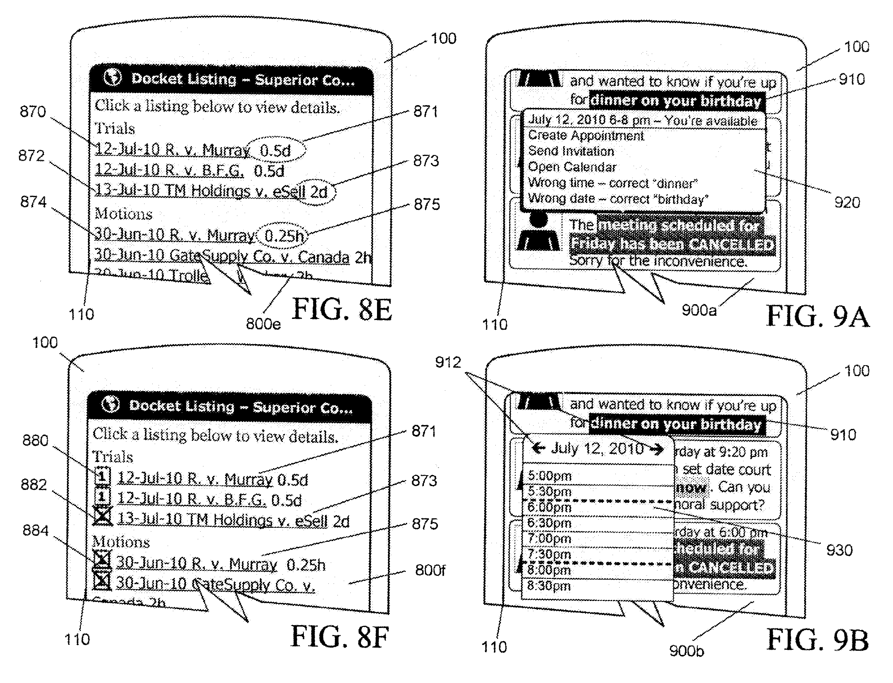

FIGS. 8E and 8F show further examples of an electronic file that is not a message. In FIGS. 8E and 8F, a web page document is displayed in the user interface 800e, 800f respectively. A similar process to that described above may be applied to the web page to identify strings representing potential events, and to associate event date information to the identified events. The web page in this example includes several lines of text 870, 872, 874, each of which comprises hyperlinked text containing a text date string. In a browser environment, hyperlinks may be rendered in a manner that visually distinguishes them from surrounding text; in the example of FIG. 8E, the hyperlinked text is underlined. Thus, if the process for identifying event indicators uses underlining to visually indicate that a string has been identified as a potential event, this may not be discernible in the browser environment. Therefore, another means for visually indicating availability for a given event indicator may be implemented instead. FIG. 8F illustrates the use of graphical elements, or icons 880, 882, 884, adjacent each identified string. Different icons 880, 882 may be used to indicate availability or unavailability for a given time period.

The web page example of FIG. 8E also depicts an example of context that may be scanned by the process to determine a duration corresponding to the event found in the web page content. Here, each hyperlinked line is visually associated with a duration notation, such as "0.5 d" 871, "2d" 873, and "0.25h" 875. The communication device 100 may be configured to identify these notations 871, 873, 875 as time durations. Accordingly, when a date and time is associated with the events identified in these hyperlinked entries 870, 872, 874, rather than apply a default rule, the process may identify these additional notations within the web page, and apply the values in these notations to the event date information as the duration of the event. The end time of each event may then be computed based on the identified start time and the duration.

In this example, the strings in the web page content identifying potential events contain express date information that identifies an absolute date by day, month, and year (e.g., "12-Jul-10"). If, however, neither the strings nor their context contained sufficient information to identify an absolute date and time for the event date information, the process may make use of either the current date or time, the date or time at which the web page was initially retrieved over the public network 224, or else, if available, a "last edited" date comprised in the web page code.

When a particular term is identified as an event indicator already associated with a date and/or time and duration in the lexicon or other data store, such as the example of "birthday" described above in FIG. 8B, the communication device 100 may, upon detecting the string and having associated the string in the message with event date information, query the calendar or other data store to determine the availability status for that time period. The device 100 may then display the event indicator in the user interface to indicate the availability status. In some cases, however, the reference to "birthday" or a similar term may be unclear; while the process may associate the string with the communication device user's birthday, the writer of the message may have been writing about another person's birthday. Thus, the user interface may be configured to provide the user with an opportunity to verify that the correct date was associated with the event indicator found in the message. In FIG. 9A, an example of an information display 920 is shown overlaying messages in the user interface 900a. The information display 920, which may be displayed in the user interface 900a when the highlighted string 910 is in focus, not only provides selectable options to create an appointment or send a meeting invitation or request, but also displays the associated date and/or time and duration, and provides selectable options to permit the user to correct the event date information associated with the highlighted terms, such as "dinner" and "birthday". In the example of FIG. 9A, the event indicator has been automatically associated with a particular date of July 12, 2010, which may correspond to a date associated with the string "birthday" or "your birthday", and also with the time period 6-8 pm, which may be a time period associated with the string "dinner". Thus, options are provided to permit alteration of either the date or the time associated with the entire phrase 910.

FIG. 9B illustrates a further view of an information display 930, which may be invoked when the event indicator 910 is in focus in the user interface 900b. In this further information display 930, a day view for the date associated with the event indicator 910 is displayed, with the time period associated with the event indicator 910 also demarcated within the information display 930. The information display 930 may also be provided with navigation elements 912, to allow the user to page through different days within the user interface 900b. In this way, the user can inspect availability during one or more days, without task switching to a calendar application view.

FIGS. 9C and 9D illustrate further views of information displays. In FIG. 9C, an information display 940 is displayed when the event indicator 935 is in focus in a user interface 900c displaying a memo file, like the memo file of FIG 8D. The information display 940 in this example provides selectable options to create an appointment, send a meeting invitation, or create a task. Upon selection of these options, an event data item may be automatically generated based on the information contained in the displayed memo file. In this embodiment, however, in addition to detecting the event indicator in the memo file, the process may also match the name "nerts" preceding the word "birthday" against contact data stored in a contact data store (e.g., an address book store) available to the device 100. If a contact data entry for the identified name, "nerts", exists, and the contact data entry includes a date for the contact's birthday, the process may associate the event indicator 935 with this date in the contact data entry. Thus, the information display 940 also includes selectable options to "View Contact in Address Book", and an option to correct the association between the event indicator 935 and the contact should the user determine that the association was incorrect.

FIG. 9D shows a further information display 950 overlaying messages similar to those shown in FIG. 8C. In FIG. 9D, the phrase "meeting scheduled for Friday has been CANCELLED" 945 is highlighted. In this particular example, the communication device 100 may be configured to identify strings comprising terms such as "meeting", "Friday", and "cancelled", and to determine that the entire phrase comprising these terms comprises a single event indicator 945. Further, the term "meeting" may be recognized as an indicator that the string 945 may refer to an event already stored in the calendar store at the device 100. Accordingly, the process may, upon detecting the event indicator 945, associate the event indicator 945 with event date information based on the reference to "Friday" in the manner generally described above, then query the calendar or other data store as described above to determine availability or the existence of a scheduling conflict. If a conflict is found, the process may then determine whether the conflicting event already stored in the calendar store matches the event described in the event indicator 945, either by date, time, or the content of the message. If a match is found, this event may be associated with the event indicator 945 in place of the previously determined event date information.

Thus, when the message containing the event indicator 945 is displayed, an indicator in the user interface 900d may indicate that the event indicator 945 has been associated with a pre-existing calendar event. In FIG. 9D, when the event indicator 945 is in focus, an information display 950 may be displayed, comprising information taken from the calendar store regarding the matching pre-existing event. The information display 950 may also include selectable options to remove the event from the calendar (this option may be made available in the information display 950 when the process detects the word "cancelled" in the message or event indicator 945), open the calendar by launching the calendar application, or to indicate to the device 100 that the identified event is not the correct event, and to launch the calendar application to find the correct event, if any.

FIG. 13C illustrates the process that may be followed in response to instructions received at the communication device 100 indicating that the pre-existing event associated with the event indicator is not correct. At 1350, an instruction is detected, for example via the user interface, that the previously stored event data item that was associated with the event indicator is not the correct event. At 1355, the association between the previously stored event and the event indicator is removed from the user interface. This may include a deletion of the event information displayed in an information display on the device 100; it may also include a removal of any visual indicator in the user interface indicating that the event indicator has been associated with any event or date or time. As a further step, an attempt may be made to re-associate the event indicator with event date information determined from the message or data item itself rather than using a pre-existing calendar event, based on information intrinsic to the event indicator, contextual information, datestamps, and/or default settings at the device 100.

If the previously stored event data item that was associated with the event indicator is to be deleted, the method outlined in FIG. 13D may be followed. At 1365, the device 100 detects in instruction to delete the appointment or other calendar event that is already stored. This instruction may be received via an information display that is displayed when the event indicator of interest is in focus. At 1370, in response to the instruction, the event data item is deleted from the calendar or other data store. At 1375, the user interface of the device 100 may be altered to reflect the update to the data store, by removing any reference to the now-deleted event in the information display, and by removing any visual indicator in the user interface denoting that the event indicator was associated with a stored event.

As noted above, some terms found in the message or other data item may be representative of specific events or occurrences, but may not expressly refer to a particular date or time. Therefore, means for associating special strings or terms with particular dates and times may be provided on the communication device 100. FIG. 10 provides an example of a user interface 1000 that may be used to receive input from a user. For example, the user may identify a day of the year as the user's birthday 1005 and anniversary 1010, if applicable. Other terminology that may be found in a message or other data item, such as "breakfast", "lunch", "lunchtime", and so forth, may be associated with particular periods during the day, and the user interface 1000 may be used to associate specific time ranges with breakfast 1035, lunch 1040, and dinner 1045. Other default time periods may also be defined. For example, for the purpose of determining whether the user is available on a given day, the communication device 100 may be configured to only check for availability during working hours. The period of time comprising working hours may be defined in the user interface 1000 at 1015. Similarly, a time period defining the weekend 1065 may also be defined.

When availability is checked for a particular time, the device 100 may default to checking whether the user is available only for a specific window starting at the specified time. The duration of the window (e.g., half an hour, an hour) may also be defined in the user interface 1000 at 1020. Other defaults that may be applied when creating appointments or meeting requests, such as the use of reminders 1025 and the applicable time zone 1030, may also be set. Finally, the user interface 1000 may also allow the user to define special events 1060 and associate them with specific dates or times 1065. The data entered via the user interface 1000 may then be saved in the lexicon file, or in another data store. Subsequently, when the device 100 detects an event indicator in a message or other data item referring to a special event defined in the lexicon file or other data store, it may associate the event indicator with the dates and/or times associated with the defined special event.

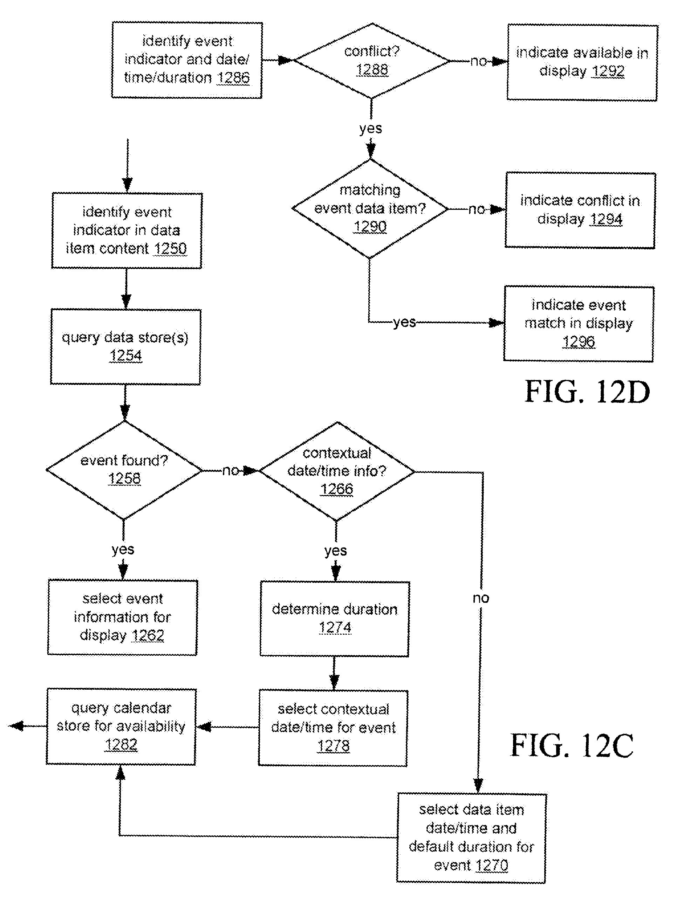

FIGS. 12C and 12D further illustrate a process of processing event indicators when the event indicator contains a reference to a particular event. In FIG. 12C, the event indicator is found in the data item at 1250. The event indicator may include strings indicative of a particular event or time period, such as "my anniversary" or "dinner". At 1254, the calendar and/or other data stores are queried to attempt to match the event indicator to an event data item already stored in the data store. For example, if the event indicator referenced a specific event, such as "my anniversary", the lexicon file or another data store may be queried for this string, and to determine whether a date is associated with the string. If the event indicator referenced a more ambiguous event, such as "dinner", the process may query the stores to determined if any events are stored that are entitled "dinner", and may select one of them, such as the next occurrence, as the matching event. If at 1258 it is determined that an event data item matching has been found, then this event is selected to be associated with the event indicator and information pertaining to this event will be displayed at 1262.

If no event data item matching the event indicator is found—for example, there may not be any date associated with "my anniversary"—the process moves to 1266, where it is determined whether the message or other data item contains any contextual information that may be used to determine the event date information to be associated with the event indicator. If such information is available, a duration of the event is determined at 1274, based either on the contextual information or on defaults stored at the communication device 100, and the start and end dates and times are determined using the contextual information, and relying in part on default settings if necessary, at 1278. At 1282, the calendar or other data stores are then queried to determine availability based on the event date information. If it is determined at 1266 that there is no contextual information in the message or other data item that may assist in establishing the event date information, the datestamp of the data item and a default duration may be selected to be associated with the event indicator at 1270.

Alternatively, rather than initially attempting to match a specific event that may be identified in the event indicator first, the method of FIG. 12D may be employed. At 1286, the event indicator is identified in the message or other data time, and the event date information is determined based on the content of the message including any contextual information, datestamps, and/or default settings. At 1288, upon querying the calendar or other data stores, it is determined whether there is a conflict with a previously stored event data item. If there is no conflict, then availability is indicated in the display of the communication device 100 in respect of that event indicator at 1292. If, however, there is a conflict, then at 1290 it is determined whether the conflicting event matches the event described by the event indicator. For example, if the event indicator or its context references a "meeting" or a "birthday", and the conflicting event data item comprises a description that matches these terms from the event indicator or context, it may be determined that there is a match. Accordingly, at 1296, the display of the device 100 may indicate that the event indicator matches this event data item. If it does not match, then the display may merely indicate that there is a conflict, i.e., the user is not available during the time associated with the event indicator, at 1294.

The systems and methods disclosed herein are presented only by way of example and are not meant to limit the scope of the subject matter described herein. Other variations of the systems and methods described above will be apparent to those in the art and as such are considered to be within the scope of the subject matter described herein. For example, it should be understood that steps and the order of the steps in the processing described herein may be altered, modified and/or augmented and still achieve the desired outcome. As another example, it will also be appreciated that although the embodiments herein have been directed generally to calendar events, similar systems and methods may be carried out in respect of other types of time or schedule-based user data. Further, as noted above, in some embodiments the data store queried may be resident in the host system 250 or in a different data store available over the public or private network 224. In such embodiments, the identification of event indicators in the message or other data item, and the association of the event indicators with event dates and times and with availability status, may be carried out at the host system 250 rather than at the communication device 100, for example after receipt by the host system 250 of a message addressed to an account associated with the communication device 100. The information regarding the associated event dates and times and availability status may then be transmitted by the host system 250 to the communication device 100 in association with the message. Thus, the lexical analyzer engine and the lexicon file may be resident at the host system 250, rather than at the communication device 100.

The systems' and methods' data may be stored in one or more data stores. The data stores can be of many different types of storage devices and programming constructs, such as RAM, ROM, flash memory, programming data structures, programming variables, etc. It is noted that data structures describe formats for use in organizing and storing data in databases, programs, memory, or other computer-readable media for use by a computer program.

Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. It is also noted that a module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

## Claims

1. A communication device (100) adapted to display a data item, the communication device comprising:
means adapted to identify (102), in the data item, content relating to an event;
means adapted to determine (102) event date information for said event-related content;
means adapted to query (102) at least one event data store accessible to the communication device (100) to determine, using the event date information, an availability status for said event; and
means adapted to display (102, 110) at the communication device at least a portion of the data item comprising the event-related content, the event-related content thus displayed being visually associated with an indication of the availability status determined for said event (614, 622a).

2. The communication device (100) of claim 1, wherein the event data store is stored in memory (108) at the communication device.

3. The communication device (100) of either claim 1 or claim 2, wherein the means adapted to determine the event date information are further adapted to:
scan the event-related content for at least one string representative of a date or time;
determine whether the at least one string identifies an absolute start date and time, and if the at least one string does not identify an absolute date, determining the absolute start date and time using at least one default setting; and
determine either an end time or a duration for the event.

4. The communication device (100) of either claim 1 or claim 2, wherein the means adapted to determine the event date information are further adapted to:
scan the event-related content for at least one string representative of a specific event;
match the at least one string to stored event information, the stored event information comprising the event date information; and
associate the stored event information with the event-related content.

5. The communication device (100) of any one of the preceding claims, wherein the means adapted to display the portion of the data item comprising the event-related content is further adapted to:
display the event-related content in said portion of the data item using a first colour or pattern if it is determined that the availability status for said event is available;
display the event-related content in said portion of the data item using a second colour or pattern if it is determined that the availability status for said event is unavailable.

6. The communication device (100) of any one of the preceding claims, further comprising means adapted to, in response to an instruction received at the communication device when the event-related content is displayed in association with said indication of the availability status, store an event data item comprising an appointment, the event data item comprising the event date information (102, 108).

7. The communication device (100) of any one of the preceding claims, wherein the data item comprises a message, the communication device further comprising means adapted to, in response to an instruction received at the communication device when the event-related content is displayed in association with said indication of the availability status, create (102, 108) an event data item comprising a meeting request, the event data item comprising the event date information; and transmit the event data item to the at least one recipient.

8. A method of displaying a data item at a communication device (100), the method comprising:
identifying (1105), in the data item, content relating to an event;
determining (1110) event date information for said event-related content;
querying (1115) at least one event data store accessible to the communication device to determine, using the event date information, an availability status for said event; and
displaying (1120) at the communication device at least a portion of the data item comprising the event-related content, the event-related content thus displayed being visually associated with an indication of the availability status determined for said event.

9. The method of claim 8, wherein the at least one event data store accessible to the communication device comprises a data store accessible over a network by the communication device and
identifying the event-related content, determining the event date information, and querying the at least one event data store are carried out at a host system (250) in communication with the communication device, the host system comprising the at least one event data store.

10. The method of either claim 8 or 9, wherein determining the event date information comprises:
scanning (1105) the event-related content for at least one string representative of a date or time;
determining (1220) whether the at least one string identifies an absolute start date and time, and if the at least one string does not identify an absolute date, determining (1240) the absolute start date and time using at least one default setting; and determining either an end time or a duration for the event (1240, 1210).

11. The method of either claim 8 or 9, wherein determining the event date information comprises:
scanning (1250) the event-related content for at least one string representative of a specific event;
matching (1258) the at least one string to stored event information, the stored event information comprising the event date information; and
associating (1262) the stored event information with the event-related content.

12. The method of any one of claims 8 to 11, wherein displaying the portion of the data item comprising the event-related content comprises:
displaying the event-related content in said portion of the data item using a first colour or pattern if it is determined that the availability status for said event is available;
displaying the event-related content in said portion of the data item using a second colour or pattern if it is determined that the availability status for said event is unavailable.

13. The method of any one of claims 8 to 12, further comprising:
in response to an instruction received (1300) at the communication device when the event-related content is displayed in association with said indication of the availability status, storing (1315) an event data item comprising an appointment, the event data item comprising the event date information.

14. The method of any one of claims 8 to 13, wherein the data item comprises a message comprising at least one recipient, the method further comprising:
in response to an instruction received (1320) at the communication device when the event-related content is displayed in association with said indication of the availability status, creating (1325) an event data item comprising a meeting request, the event data item comprising the event date information; and
transmitting (1340) the event data item to the at least one recipient.

15. A computer readable medium comprising computer executable instructions which, when executed on one or more processors of a computing system, cause the system to carry out the method of any one of the preceding claims.

## Amended claims

### Amended claims in accordance with Rule 137(2) EPC.

**1.** A communication device (100) adapted to display a data item, the communication device comprising:
means adapted to identify (102), in the data item, content relating to an event;
means adapted to determine (102) event date information for said event-related content;
means adapted to query (102) at least one event data store accessible to the communication device (100) to determine, using the event date information, an availability status for said event; and
means adapted to display (102, 110) at least a portion of the data item comprising the event-related content concurrently with a visual indication of said availability status arranged inline with said event-related content within said data item.

**2.** The communication device (100) of claim 1, wherein the means adapted to query the at least one event data store are adapted to query said at least one event data store while said portion of the data item is being displayed.

**3.** The communication device (100) of either claim 1 or claim 2, wherein the means adapted to determine the event date information are further adapted to:
scan the event-related content for at least one string representative of a date or time;
determine whether the at least one string identifies an absolute start date and time, and if the at least one string does not identify an absolute date, determining the absolute start date and time using at least one default setting; and
determine either an end time or a duration for the event.

**4.** The communication device (100) of either claim 1 or claim 2, wherein the means adapted to determine the event date information are further adapted to:
scan the event-related content for at least one string representative of a specific event;
match the at least one string to stored event information, the stored event information comprising the event date information; and
associate the stored event information with the event-related content.

**5.** The communication device (100) of any one of the preceding claims, wherein the visual indication comprises: display of the event-related content in a first colour or pattern if it is determined that the availability status for said event is available, and display of the event-related content in a second colour or pattern if it is determined that the availability status for said event is unavailable.

**6.** The communication device (100) of any one of the preceding claims, further comprising means adapted to, in response to an instruction received at the communication device resulting from actuation of said visual indication, store an event data item comprising an appointment, the event data item comprising the event date information (102, 108).

**7.** The communication device (100) of any one of the preceding claims, wherein the data item comprises a message, the communication device further comprising means adapted to, in response to an instruction received at the communication device resulting from actuation of said visual indication, create (102, 108) an event data item comprising a meeting request, the event data item comprising the event date information; and transmit the event data item to the at least one recipient.

**8.** A method of displaying a data item at a communication device (100), the method comprising:
identifying (1105), in the data item, content relating to an event;
determining (1110) event date information for said event-related content;
querying (1115) at least one event data store accessible to the communication device to determine, using the event date information, an availability status for said event; and
displaying (1120) at least a portion of the data item comprising the event-related content concurrently with a visual indication of said availability status arranged inline with said event-related content within said data item.

**9.** The method of claim 8, wherein the at least one event data store accessible to the communication device comprises a data store accessible over a network by the communication device, and identifying the event-related content, determining the event date information, and querying the at least one event data store are carried out at a host system (250) in communication with the communication device, the host system comprising the at least one event data store.

**10.** The method of either claim 8 or 9, wherein determining the event date information comprises :
scanning (1105) the event-related content for at least one string representative of a date or time;
determining (1220) whether the at least one string identifies an absolute start date and time, and if the at least one string does not identify an absolute date, determining (1240) the absolute start date and time using at least one default setting; and determining either an end time or a duration for the event (1240, 1210).

**11.** The method of either claim 8 or 9, wherein determining the event date information comprises :
scanning (1250) the event-related content for at least one string representative of a specific event;
matching (1258) the at least one string to stored event information, the stored event information comprising the event date information; and
associating (1262) the stored event information with the event-related content.

**12.** The method of any one of claims 8 to 11, wherein the visual indication comprises:
display of the event-related content in a first colour or pattern if it is determined that the availability status for said event is available;
display of the event-related content in a second colour or pattern if it is determined that the availability status for said event is unavailable.

**13.** The method of any one of claims 8 to 12, further comprising:
in response to an instruction received (1300) at the communication device resulting from actuation of said visual indication, storing (1315) an event data item comprising an appointment, the event data item comprising the event date information.

**14.** The method of any one of claims 8 to 13, wherein the data item comprises a message comprising at least one recipient, the method further comprising:
in response to an instruction received (1320) at the communication device resulting from actuation of said visual indication, creating (1325) an event data item comprising a meeting request, the event data item comprising the event date information; and
transmitting (1340) the event data item to the at least one recipient.

**15.** A computer readable medium comprising computer executable instructions which, when executed on one or more processors of a computing system, cause the system to carry out the method of any one of claims 8 to 14.
